# EUROPEAN PATENT APPLICATION

(11) **EP 0 944 284 A2**
(43) Date of publication of application: **22.09.1999**
(21) Application number: 99102753.3
(22) Date of filing: 22.02.1999
(51) Int. Cl.: H04Q 11/04

(54) **Asynchronous transfer mode communications network managing device**

(30) Priority: 20.03.1998 JP 7272598
(71) Applicant: FUJITSU LIMITED, Kawasaki-shi, Kanagawa 211-8588 (JP)
(72) Inventor: Jimbo, Kazuya, c/oFUJITSU HOKKAIDO COM.SYSTEM LTD., Sapporo-shi, Hokkaido 004-8550 (JP); Chiba, Hideyuki, c/oFUJITSU HOKKAIDO COM.SYSTEM, Sapporo-shi, Hokkaido 004-8550 (JP); Abe, Hiroaki, Nakahara-ku, Kawasaki-shi, Kanagawa 211 (JP); Kajitani, Yuki, Nakahara-ku, Kawasaki-shi, Kanagawa 211 (JP); Arai, Toshimasa, Nakahara-ku, Kawasaki-shi, Kanagawa 211 (JP); Yamaguchi, Yasuhiro, Nakahara-ku, Kawasaki-shi, Kanagawa 211 (JP); Mori, Nobukazu, Nakahara-ku, Kawasaki-shi, Kanagawa 211 (JP)
(74) Representative: HOFFMANN - EITLE

(57) **Abstract**

A connection uploading unit (405) uploads path information about a PVC established in a network from each NE (101) at a desired time point, and reflects the uploaded path information as the data of an NMS (201). A connection diagnosing unit (406) detects an inconsistency between the PVC data stored in the network and that stored in the NMS (201). A connection re-establishing unit (407) provides the path information for correcting the contents of the inconsistency to the NMS (201) itself or each NE (101), and re-establishes the PVC, when the inconsistency is detected.

## Description

### Background of the Invention

### Field of the Invention

The present invention relates to a network management operation field such as network management performed by carriers engaged in information communications networks, network management performed within enterprises, etc., and more particularly to a network management technique for managing a plurality of NEs (Network Elements) such as switches, transmitting devices, routers, bridges, computers, etc., which are interconnected by a network.

### Description of the Related Art

Network management is a technique essential to network operations. Typical of network management operations is an operation such as that for selecting an optimum path while observing the routing of an ATM switch or the empty state of a bandwidth and for securing the path between points requested by a user in an ATM (Asynchronous Transfer Mode) network.

To increase the operational efficiency of operators who manage respective network domains and to improve the services provided to network users (end users) are the objectives common to network management systems. Also the present invention targets a service field intended to increase the efficiency of such network management operations.

In this field, not only many network carriers but also NE vendors have been advancing network standardization in the ITU-T, the ISO, etc. on a worldwide scale.

A conventional way of realizing network management is a network management system (NMS).

A conventional NMS can manage resource information possessed by each NE, that is, the information about a physical line arranged for an NE which is a connected party, the information about a VP (Virtual Path)/VC (Virtual Channel) defined in the resource information, the information about a connection established with the VP/VC, etc. However, the conventional NMS cannot comprehensively manage the information about an end-to-end connection in an entire network.

For example, if the conventional NMS manages a PVC (Permanent Virtual Circuit) path, it can establish and display the PVC for each NE based on the resource information possessed by each NE. The conventional NMS, however, cannot comprehensively manage the PVC which covers a plurality of NEs and is established end-to-end, by making an association between the respective resource information stored by the plurality of NEs.

Therefore, the conventional NMS cannot realize the capability for comprehensively managing, for example, an end-to-end PVC path on a topology map corresponding to an actual network configuration.

Furthermore, the conventional NMS can manage the connection established by the NMS itself, but it cannot manage the connection established by a local operation terminal belonging to each NE.

Namely, the conventional NMS has the following problems.
a) It is impossible to identify all of PVCs used in an actual network, and is difficult to manage the entire network including the PVCs.
b) It is difficult to perform strict bandwidth checking or schedule management for the resources such as existing line interfaces, VPs, etc., when the NMS establishes a new PVC.
c) Operational restrictions are imposed on network administrators. For example, the operation for establishing a PVC, which is performed by a local operation terminal, is not permitted etc.
   Furthermore, an inconsistency may arise between the PVC data managed by the NMS and an actual PVC established in an ATM switch network in the following cases. The conventional NMS, however, does not provide a definite technique for eliminating such an inconsistency.
d) In the case where an NMS is introduced into an operating ATM switch network.
e) In the case where the session between an NMS and an NE (or a local operation terminal belonging to an NE) is restored after it is temporarily disconnected.

### Summary of the Invention

The present invention was developed in the above described background, and aims at providing a mechanism for allowing a PVC, which covers a plurality of NEs and is established end-to-end, to be comprehensively managed by making an association between respective resource information stored in the plurality of NEs, and for maintaining the consistency between the management data of an NMS and that of each NE.

The present invention assumes a network managing device for managing the path information of a network which makes communications in an asynchronous transfer mode.

A connection uploading means (a connection uploading unit 405) is intended to upload the path information about a connection (PVC) established in a network from each network element device (NE 101) configuring the network at a desired time point, and reflects the uploaded information as the data of a network managing device (NMS 201).

A connection diagnosing means (a connection diagnosing unit 406) detects the inconsistency between a network connection and the data of the network managing device.

A connection re-establishing means (a connection re-establishing unit 407) re-establishes a connection by providing the path information for correcting the contents of the inconsistency to the network managing device or each network element device, when the inconsistency is detected.

According to the present invention as recited in claim 1, a connection can be newly established or re-established when a network managing device is introduced into a network, or when the inconsistency between the data of the network managing device and the data within the network arises.

According to the present invention as recited in claim 2, a connection, which covers a plurality of network element devices and is established end-to-end, can be comprehensively managed by making an association between respective resource information stored in the plurality of network element devices.

According to the present invention as recited in claim 3, inter-network interface information whose connection relationship is unknown within a network managing device is interactively complemented by an operator based on a prediction made by the network managing device, whereby each connection can be managed.

According to the present invention as recited in claim 4, all of PVCs within a network can be reflected in a network managing device. Consequently, even if a network managing device is introduced into an operating network, or even if an inconsistency arises between the PVC data within the network managing device and that within an actual network due to the session disconnection between the operating network managing device and a network element device and so on, the network managing device can identify all of the PVCs used in the actual network.

According to the present invention as recited in claim 5, a connection diagnostic process can be automatically invoked based on an alarm received from a network.

According to the present invention as recited in claim 6, even if an inconsistency arises between the data registered by a network managing device side and the data stored by a network element device side due to a network disconnection between a network element device to be monitored and a network managing device, the restart of the network element device, a local operation performed for the network element device, etc., the existing difference or differences are extracted and restoration can be made by using the information of the extracted differences depending on need.

According to the present invention as recited in claim 7, the path information of a connection, which exists not on a network managing device but in an actual network, can be interactively input and be reflected in the network managing device.

According to the present invention as recited in claim 8, the point at which a continuity test (loopback test) must be conducted is found based on the data stored on a network managing device side and the difference information extracted according to the invention as recited in claim 6, so that a connection can be re-registered (re-established) for the corresponding network element device, and a point of a connection, which is unused despite being connected, can be detected.

According to the present invention as recited in claim 9, a registration request is again issued to the point at which a connection must be re-registered (re-established) or to a connection which is not continuous end-to-end based on the result extracted by the invention as recited in claim 6 and the result of loopback test by the invention as recited in claim 8, thereby making restoration.

According to the present invention as recited in claim 10, the configuration of a connection can be identified even in the nighttime or even if few administrators are present, so that the inconsistency between the data on a network managing device side and that on a network element device side can be eliminated.

According to the present invention as recited in claim 11, a connection can be restored or can be reverted to its previous state by storing and freezing current path information in advance prior to the start of inconsistency checking, even if a schedule is inadequately arranged, or even if registration information data is destroyed.

According to the present invention as recited in claim 12, which connection or which portion of a connection is locally set up, or which point is discontinuous are detected by using the difference information stored with the checking capability according to the present invention as recited in claim 6 and by restoring the connection which is the difference, so that the detected point can be restored.

According to the present invention as recited in claim 13, not only the process for comprehensively managing a connection which is established end-to-end and for maintaining a consistency, but also the process for comprehensively managing general constituent elements of a network and for maintaining a consistency can be implemented.

More specifically, a network managing device and an administrator for a network can eliminate an inconsistency (between the data of a network managing device and that of a network element device to be managed), which arises due to a setting change input from an administration terminal belonging to each network element device, a state change made to each network element device during a period from the disconnection of a message transmitting/receiving line to its restoration, a fault, etc., with the automatic process performed by the network managing device or the operations manually performed by the administrator. As a result, the state where a service cannot be set up due to the inconsistency between the data of the network managing device and that of the network element device despite the service instruction issued from the network managing device to an actual network, can be prevented.

According to the present invention as recited in claim 14, the operation which has side effects on a consistency checking process during the execution of consistency checking and is performed within a network managing device, can be prohibited.

According to the present invention as recited in claim 15, a consistency checking process can be aborted when a message having side effects on the consistency checking process is received during the execution of consistency checking. As a result, a useless consistency checking process can be prevented.

According to the present invention as recited in claim 16, a consistency checking process can be aborted by referencing a consistency checking process starting user authority and assigning a priority with the user authority, when a message having side effects on the consistency checking process is received during the execution of consistency checking. As a result, a useless consistency checking process can be prevented.

According to the present invention as recited in claim 17, the abortion of a consistency checking process, notification of side effects, and re-execution of the consistency checking process can be automatically determined according to a request that an operator issues beforehand, when a message having side effects on the consistency checking process is received during the execution of consistency checking. As a result, the consistency checking process can be efficiently performed.

According to the present invention as recited in claim 18, a storage medium for implementing the respective capabilities of the present invention can be provided.

### Brief Description of the Drawings

One skilled in the art can easily understand additional features and objects of this invention from the description of the preferred embodiments and some of the attached drawings, wherein:
Fig. 1 is a schematic diagram showing the configuration of a network before an NMS is introduced;
Fig. 2 is a schematic diagram showing the configuration of a network after an NMS is introduced;
Fig. 3 is a schematic diagram showing the transition of a use state, which relates to the introduction of an NMS;
Fig. 4 is a block diagram showing the configuration of an NMS according to a first preferred embodiment of the present invention;
Fig. 5 shows the configuration of a network according to the first preferred embodiment of the present invention;
Fig. 6 is a flowchart showing the process for uploading PVC connection data;
Fig. 7 is a flowchart showing the process for performing NMS data consistency checking;
Fig. 8 is a block diagram showing the configuration of a second preferred embodiment according to the present invention (No. 1);
Fig. 9 is a block diagram showing the configuration of the second preferred embodiment according to the present invention (No. 2);
Fig. 10 shows a routing table;
Fig. 11 shows a screen image displayed by a GUI interacting unit;
Fig. 12 is a block diagram showing the configuration of a third preferred embodiment according to the present invention;
Fig. 13 is a flowchart showing the operations performed in the third preferred embodiment of the present invention;
Fig. 14 shows the data structure of an unknown NNI list;
Fig. 15 shows the data structure of an opposing NNI candidate list;
Fig. 16 shows the GUI image of the unknown NNI list;
Fig. 17 shows the GUI image of the opposing NNI candidate list;
Fig. 18 is a flowchart showing the operations performed in a fourth preferred embodiment of the present invention;
Fig. 19 is a schematic diagram showing the configuration of an ATM network according to the fourth preferred embodiment of the present invention;
Fig. 20 shows the routing table used in the fourth preferred embodiment;
Fig. 21 is a block diagram showing the configuration of an NMS according to a fifth preferred embodiment of the present invention;
Fig. 22 is a flowchart showing the process for uploading an alarm;
Fig. 23 is a block diagram showing the configuration of a sixth preferred embodiment according to the present invention;
Fig. 24 is a flowchart showing the operations performed in the sixth preferred embodiment according to the present invention;
Fig. 25 is a schematic diagram explaining a network according to the sixth preferred embodiment of the present invention;
Fig. 26 is a schematic diagram explaining the sixth preferred embodiment of the present invention (No. 1);
Fig. 27 shows the list for explaining the sixth preferred embodiment of the present invention (No. 2);
Fig. 28 shows the list for explaining the sixth preferred embodiment of the present invention (No. 3);
Fig. 29 is a block diagram showing the configuration of a seventh preferred embodiment according to the present invention;
Fig. 30 is a flowchart showing the operations performed in the seventh preferred embodiment according to the present invention;
Fig. 31 shows the structure of virtual PVC data;
Fig. 32 shows the GUI image for establishing a virtual PVC;
Fig. 33 is a block diagram showing the configuration of an eighth preferred embodiment according to the present invention;
Fig. 34 is a flowchart showing the operations performed in the eighth preferred embodiment according to the present invention;
Fig. 35 is a schematic diagram explaining a network according to the eighth preferred embodiment of the present invention;
Fig. 36 is a block diagram showing the configuration of a ninth preferred embodiment according to the present invention;
Fig. 37 is a flowchart showing the operations performed in the ninth preferred embodiment of the present invention;
Fig. 38 is a schematic diagram explaining a network according to the ninth preferred embodiment of the present invention;
Fig. 39 is a block diagram showing the configuration of a tenth preferred embodiment according to the present invention;
Fig. 40 is a flowchart showing the operations performed in the tenth preferred embodiment according to the present invention;
Fig. 41 is a schematic diagram explaining a network according to the tenth preferred embodiment of the present invention;
Fig. 42 is a block diagram showing the configuration of an eleventh preferred embodiment according to the present invention;
Fig. 43 is a flowchart showing the operations performed in the eleventh preferred embodiment according to the present invention;
Fig. 44 is a schematic diagram explaining a network according to the eleventh preferred embodiment of the present invention;
Fig. 45 is a block diagram showing the configuration of a twelfth preferred embodiment according to the present invention;
Fig. 46 is a flowchart showing the operations performed in the twelfth preferred embodiment according to the present invention (No. 1);
Fig. 47 is a flowchart showing the operations performed in the twelfth preferred embodiment according to the present invention (No. 2);
Fig. 48 is a flowchart showing the operations performed in the twelfth preferred embodiment according to the present invention (No. 3);
Fig. 49 is a schematic diagram explaining a network according to the twelfth preferred embodiment of the present invention;
Fig. 50 is a block diagram showing the configuration of a thirteenth preferred embodiment according to the present invention;
Fig. 51 is a schematic diagram showing the sequence of the operations performed in the thirteenth preferred embodiment according to the present invention (No. 1);
Fig. 52 is a schematic diagram showing the sequence of the operations performed in the thirteenth preferred embodiment according to the present invention (No. 2);
Fig. 53 is a block diagram showing the configuration of a fourteenth preferred embodiment according to the present invention (No. 1);
Fig. 54 shows the structure of a consistency checking type table;
Fig. 55 shows the structure of a consistency checking process control table according to the fourteenth preferred embodiment of the present invention;
Fig. 56 is a block diagram showing the configuration of the fourteenth preferred embodiment according to the present invention (No. 2);
Fig. 57 shows the structure of a consistency checking process control table according to a fifteenth preferred embodiment of the present invention;
Fig. 58 shows the structure of a consistency checking process control table according to a sixteenth preferred embodiment of the present invention;
Fig. 59 shows the structure of a consistency checking process control table according to a seventeenth preferred embodiment of the present invention; and

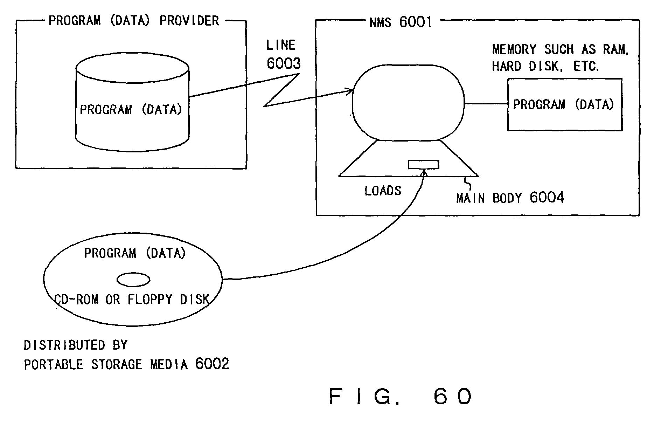

Fig. 60 is a schematic diagram explaining storage media storing a program which implements the preferred embodiments.

### Description of the Preferred Embodiments

Provided below is the explanation about the details of the preferred embodiments according to the present invention.

### 〈Configuration Common to the Preferred Embodiments According to the Present Invention〉

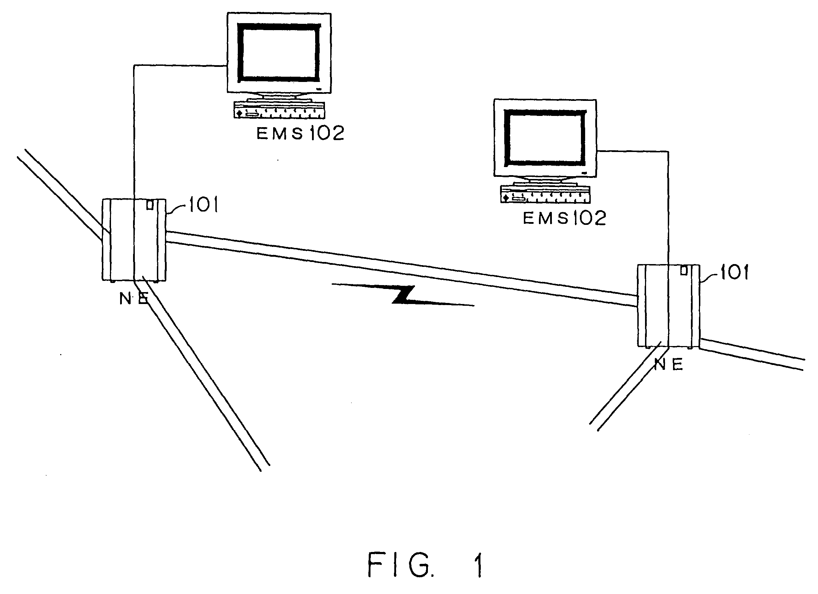

Fig. 1 is a schematic diagram showing the configuration of a network before an NMS which comprises a network path information management capability according to the preferred embodiments of the present invention is introduced. Each of NEs (Network Elements) 101 is, for example, an ATM exchange. Each of EMSs (Element Management System) 102 is an element management device belonging to each of the NEs 101, such as an administration terminal etc.

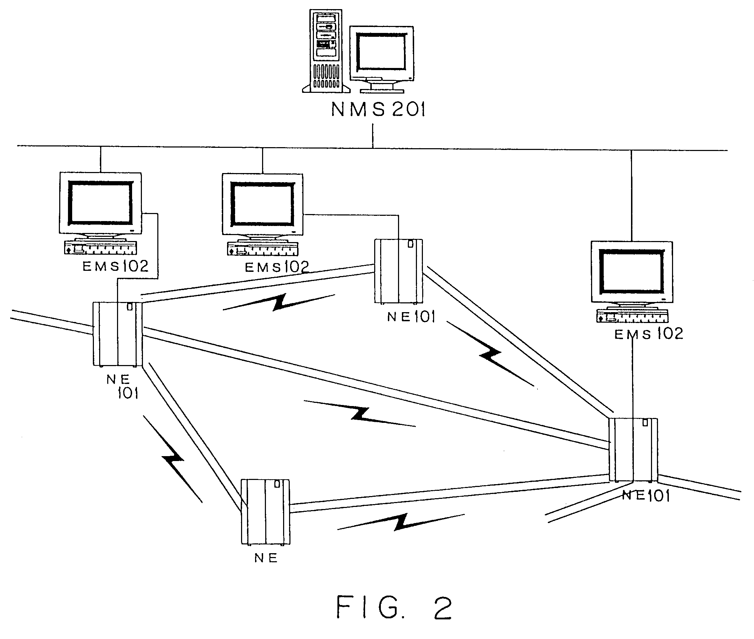

Fig. 2 is a schematic diagram showing the configuration of a network when the NMS which comprises a network path information management capability according to the preferred embodiments of the present invention, is introduced into the network configuration shown in Fig. 1.

In an early stage where an NMS 201 is introduced, the NMS 201 holds no PVC path information. The NMS 201 cannot manage the PVC data set via the EMS 102.

Even after the NMS is introduced, if each of the EMSs 102 performs a PVC local operation for each of the NEs 101 due to an abnormal state of a DCN (Data Communications Network) connecting the NMS 201 and each of the NEs 101 or a fault of each of the NEs 201, an inconsistency arises between the PVC data held by the NMS 201 and that within an actual ATM network.

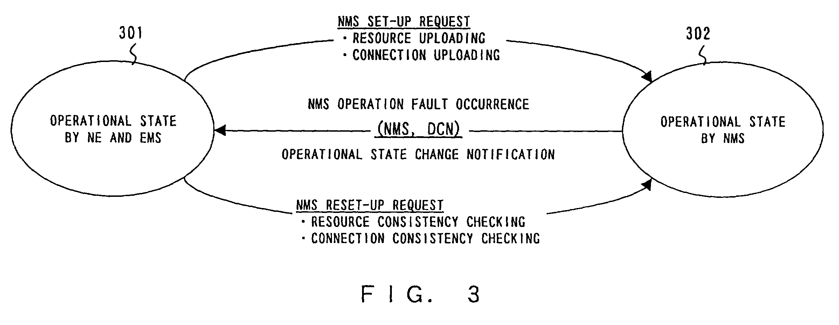

Fig. 3 shows the transition of an operational state according to the preferred embodiments of the present invention regarding when the NMS for managing an ATM network is introduced.

In Fig. 3, a state 301 is an operational state by the NE 201 and the EMS 102, while a state 302 is an operational state by the NMS 201.

When an NMS set-up request event which indicates an early introduction of the NMS 201 occurs in the operational state 301 by the NE 201 and the EMS 102, an operation for making a connection to each of the NEs 101 or for collecting data (a resource uploading/connection uploading operation) is performed in order to capture the resource data or the connection data of an actual ATM network into the NMS 201. The operational state 301 then makes a transition to the operational state 302 by the NMS 201.

If a local operation by each of the EMSs 102 is temporarily required due to a fault of a DCN (Data Communications Network) between the NMS 201 and each of the NEs 101, or a fault of the NMS 201 itself in the operational state 302, the state is reverted to the operational state 301 with an operational state change notification.

If the fault is restored, the state makes a transition to the operational state 302 by the NMS 201 after resources and connections are consistency-checked with an NMS re-set-up request event.

### 〈First Preferred Embodiment According to the Present Invention〉

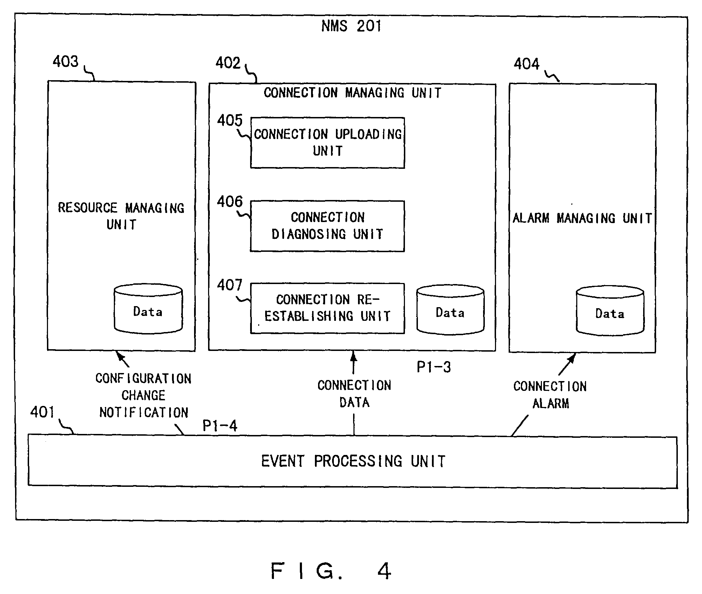

Fig. 4 is a block diagram showing the configuration of the NMS 201 according to a first preferred embodiment of the present invention.

A connection managing unit 402 manages the operations for an end-to-end path in an ATM network, such as a PVC or an SVC (Switched Virtual Circuit). An event processing unit 401 processes a communication event received from each of the NEs 101, and a communication event occurred between respective managing units with an operation performed within the NMS 201.

The first preferred embodiment according to the present invention particularly relates to the operations for PVC path data, which are mainly performed by the connection managing unit 402 in NMS 201, which has the configuration described above.

When the NMS 201 is introduced into an existing ATM network as described above, the NMS 201 cannot manage the PVC data which were defined so far by the respective NEs 101 via the respective EMSs 102 by simply uploading the resource data stored by the respective NEs 101 with the resource management capability possessed by the NMS 201.

To overcome this problem, a connection uploading unit 405 obtains the information about data of ports and VPs/VCs, and connection information between VPs or between VCs, which are separately existing constituent elements of PVC data in the respective NEs. Then, the connection uploading unit 405 recognizes the end-to-end PVC data by extracting the connection relationship between the ports of the network from the port type and the VPI/VCI. As a result, the PVC can be managed by the NMS 201.

Similarly, if each of the EMSs 102 performs the operation of a local PVC for each of the NEs 101 due to an abnormal state of a DCN (Data Communications Network) or a fault of each of the NEs 101, an inconsistency arises between the PVC data within an actual ATM network and that within the NMS 201.

To overcome this problem, a connection diagnosing unit 406 within the connection managing unit 402 performs a diagnostic process for checking the missing or inconsistency of elements such as a VP/VC structuring each PVC, etc. If an element is determined to be missing as a result of this diagnostic process, a connection re-establishing unit 407 establishes a new PVC path.

With the configuration according to the first preferred embodiment of the present invention, which is shown in Fig. 4, a PVC connection is newly established or re-established when the NMS 201 is introduced into the network configuration shown in Fig. 1, or when a PVC data inconsistency that the NMS 201 cannot recognize occurs in the network configuration shown in Fig. 2

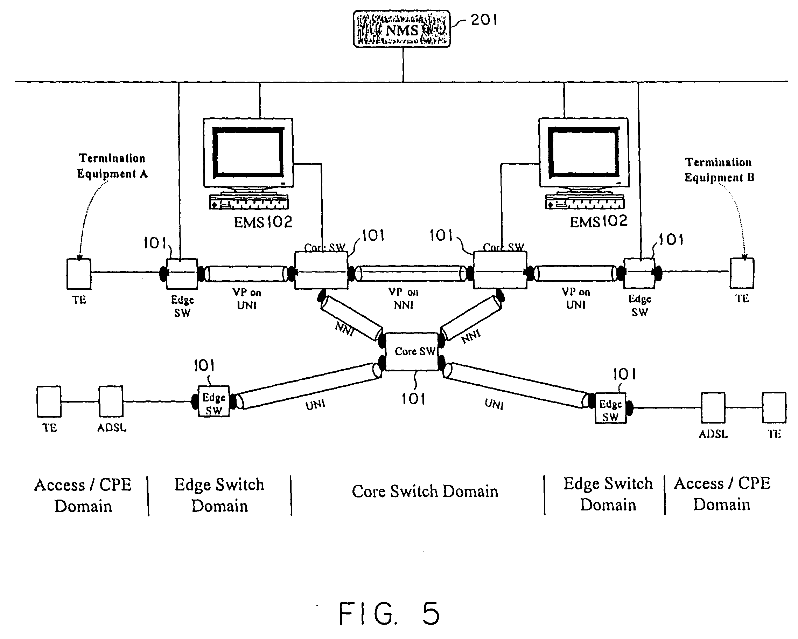

Fig. 5 is a schematic diagram showing the network configuration according to the first preferred embodiment of the present invention. This figure shows the example where a VCC (Virtual Channel Connection) which links TEs (Termination Equipments) A and B end-to-end, is managed.

Core switches (Core SWs) and edge switches (Edge SWs) that are respective large-scale and small-scale switches shown in Fig. 5 configure the NEs 101. ADSL (Asymmetric Digital Subscriber Loop(Line)) devices are communication devices for implementing high-speed communications at asymmetric transmission rates for an upstream and a downstream. The core switches are interconnected by NNIs (Network-Network Interfaces), between which virtual paths (VPs) are established. Each of the core switches is connected to each of the edge switches by a UNI (User Network Interface), on which a VP is established.

Each of the NEs 101 includes ports, VPs/VCs defined in the ports, and the connection data between VPs or between VCs. Each of the NEs, however, does not include the correspondence information indicating which ports are interconnected between two NEs 101.

Therefore, when the NMS 201 is introduced into an existing ATM network, it is necessary to extract the correspondences between ports, and to capture the correspondences between ports to be passed through and their VPs/VCs for the two termination equipment devices A and B and all of the relaying NEs 101, which configure a VCC, as the data managed by the NMS 201.

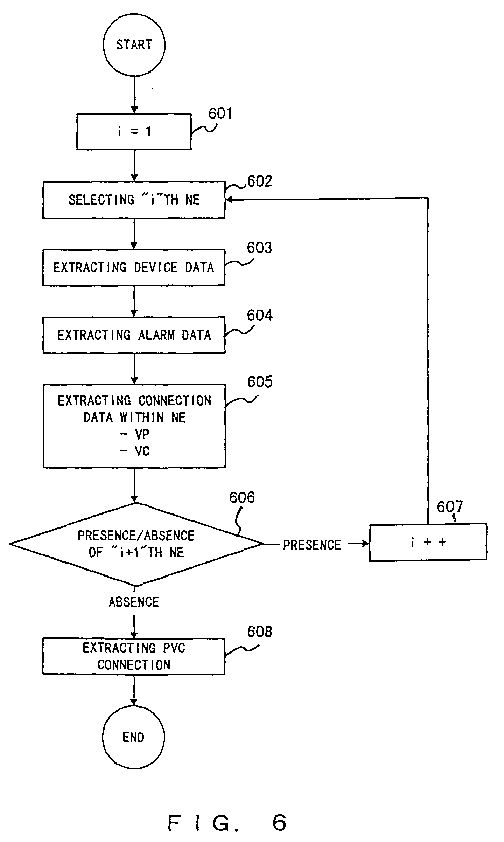

Fig. 6 is a flowchart showing the process for uploading PVC connection data, which is performed by the connection uploading unit 405 shown in Fig. 4.

This process is started from an arbitrary NE 101 (step 601). If an "i"th NE 101 is selected (step 602), the device data (resource data), alarm data, and the connection data including the VPs/VCs within the NE 101 are respectively uploaded to the resource managing unit 403, the alarm managing unit 404, and the connection managing unit 402, which are shown in Fig. 4 (steps 603 through 605 → step 607 → step 602).

Each of the EMSs 102 corresponding to each of the NEs 101 and the NMS 201 are interconnected, for example, by an IP network. Each of the EMSs 102 can be identified with an IP address.

After the data of all of the NEs 101 (hereinafter referred to as NE data) are uploaded, a PVC connection is extracted by making the collected VPs/VCs consistent (step 608).

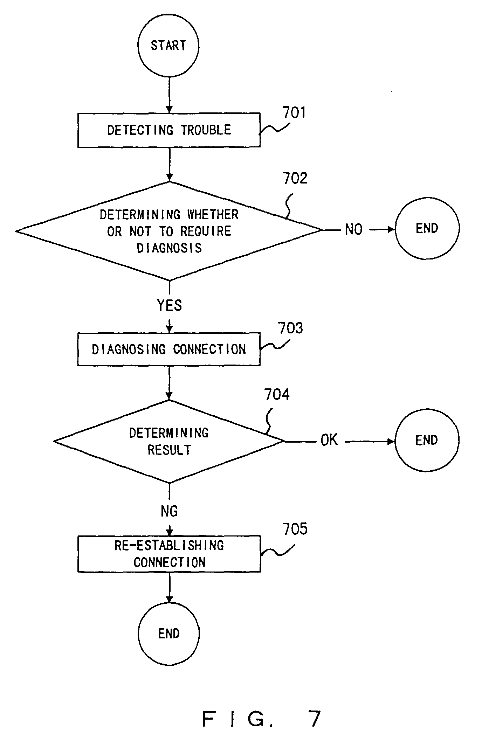

Fig. 7 is a flowchart showing the process for checking an NMS data consistency, which is performed by the connection diagnosing unit 406 and the connection re-establishing unit 407 shown in Fig. 4.

If each of the EMSs 102 performs the operation of a local PVC for each of the NEs 101 due to an abnormal state of a DCN or a fault of each of the NEs 101, or if a trouble occurs in the NMS 201 itself, an inconsistency arises between the PVC data within an actual ATM network and that within the NMS 201 as described above.

When the connection diagnosing unit 406 (shown in Fig. 4) detects such a trouble (step 701), it determines whether or not the connection must be diagnosed (step 702). If the connection must be diagnosed (step 702, YES), the connection diagnosing unit 406 diagnoses the connection (step 703).

If the connection diagnosing unit 406 determines that the PVC data must be newly uploaded and the connection must be re-established as a result of the diagnosis of the connection, it activates the connection re-establishing unit 407 (step 704, NG).

The connection re-establishing unit 407 uploads the NE data such as the above described device data, etc. from all of the NEs 101 that the NMS 201 manages, and re-establishes the PVC connection.

### 〈Second Preferred Embodiment According to the Present Invention〉

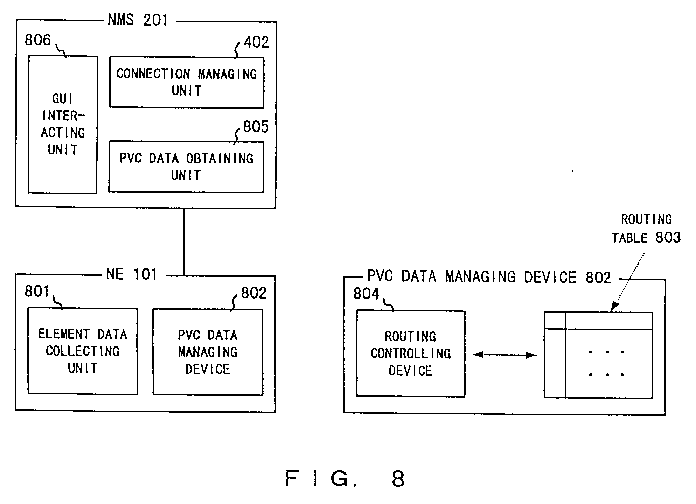

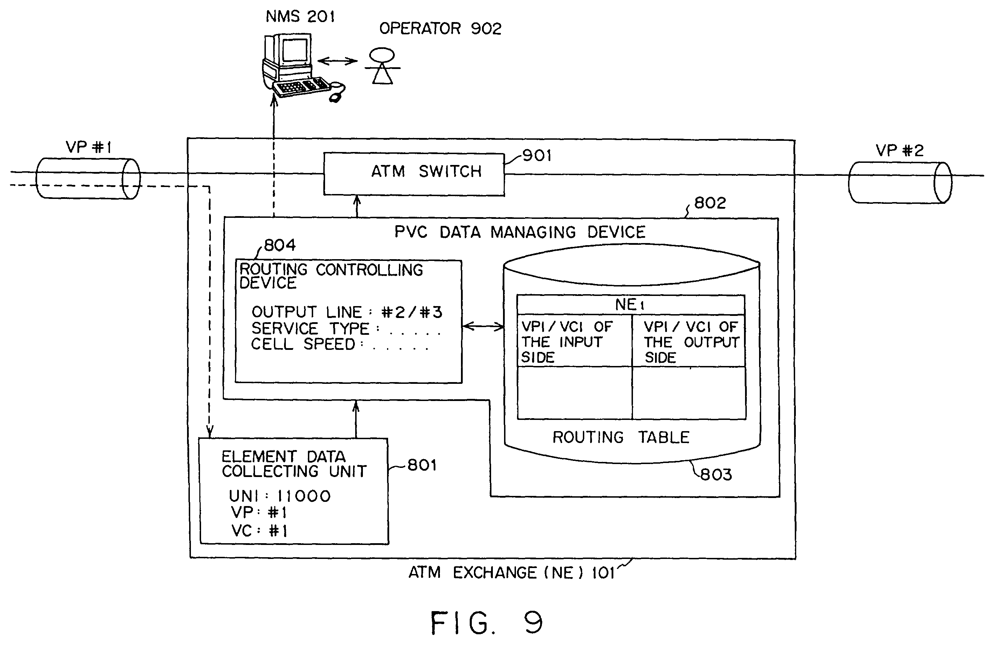

Figs. 8 and 9 are block diagrams showing the configuration of a second preferred embodiment according to the present invention.

The NE 101 includes a PVC data management device 802 and an element data collecting unit 801. The PVC data management device 802 further includes a routing table 803 and a routing controlling device 804.

The NE 101 performs the following operations as a fundamental PVC routing capability.

The element data collecting unit 801 collects the data of the elements required for establishing a PVC, such as UNIs, VPs, VCs, etc. possessed by an NE 101, which is an ATM exchange, from each line port and each ATM cell at each port, etc. within the NE 101. In the example shown in Fig. 9,${\text{VPI IN}}_{\text{1}} {\text{(NE}}_{\text{1}} {\text{)/VCI IN}}_{\text{1}} {\text{(NE}}_{\text{1}} \text{) = #1/#1}$ is collected as the VPI/VCI of the input side. Note that "NE₁" is an identification symbol of the NE 101.

The collected data are transmitted to a routing control device 804 within the PVC data management device 802 as the information such as destination information of a connected party, a service type, a cell speed, etc.

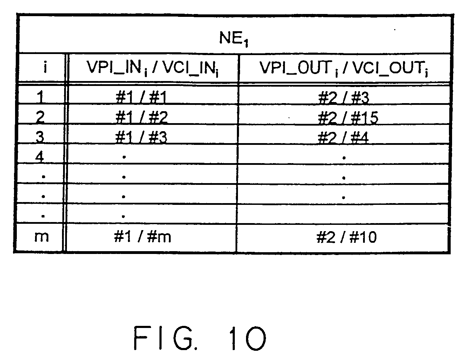

The routing control device 804 performs a mapping process for determining the VPI/VCI of an output side, which corresponds to an output line, by using the VPI/VCI of the input side, which is received from the element data collecting unit 801, and by referencing the routing table 803 structured, for example, as shown in Fig. 10. In the examples shown in Figs. 9 and 10,${\text{VPI OUT}}_{\text{1}} {\text{(NE}}_{\text{1}} {\text{)/VCI OUT}}_{\text{1}} {\text{(NE}}_{\text{1}} \text{) = #2/#3}$ is determined as the VPI/VCI of the output side.

The respective entries in the routing table 803 are generated when a PVC is registered by an EMS 102 connected to an NMS 201 or an NE 101.

A PVC data obtaining unit 805 within the NMS 201 obtains the information about the PVC data including the contents of the routing table 803 managed by the PVC data management device 802 within the NE 101, and the information (including bandwidth information, etc.) of each NI (Network Interface card) mounted on the NE 101 at suitable timing, and passes the obtained information to the connection managing unit 402, the resource managing unit 403, or the alarm managing unit 404 (shown in Fig. 4).

The PVC data obtaining unit 805 corresponds to the connection uploading unit 405 according to the first preferred embodiment of the present invention, which is shown in Fig. 4 (also refer to Fig. 6).

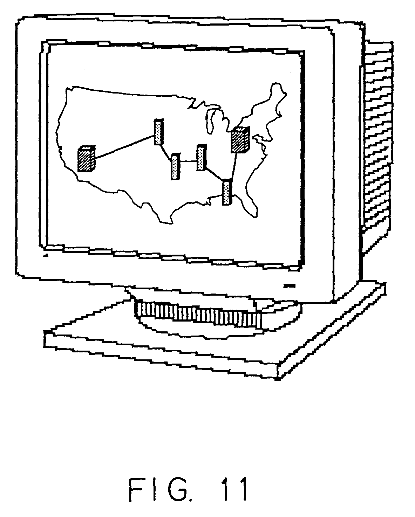

A GUI interacting unit 806 within the NMS 201 displays the connection relationship between each PVC and each NE 101 in an ATM network, for example, as a screen image shown in Fig. 11 for an operator 902, based on the PVC data obtained from each NE 101.

With the above described configuration according to the second preferred embodiment of the present invention, the PVC which covers a plurality of NEs 101 and is established end-to-end can be comprehensively managed by making an association between the respective resource information of the plurality of NEs 101.

### 〈Third Preferred Embodiment According to the Present Invention〉

Provided next is the explanation about a third preferred embodiment according to the present invention.

The third preferred embodiment according to the present invention relates to the capability of the connection uploading unit 405 according to the first preferred embodiment of the present invention, which is shown in Fig. 4, and implements part of the PVC connection extracting process (step 608 of Fig. 6) performed by the connection uploading unit 405.

With the process represented by the flowchart of Fig. 6 in the first preferred embodiment of the present invention, or with the process explained by referring to Figs. 8, 9, etc. in the second preferred embodiment of the present invention, the connection uploading unit 405 (shown in Fig. 4) within the connection managing unit 402 included in the NMS 201 obtains from each of the NEs 101 configuring the ATM network the contents of the routing table 803 (shown in Fig. 8) indicating the connection of each of the NEs 101, and the information (such as bandwidth information, etc.) of each NI (Network Interface card) mounted on each of the NEs 101. The connection uploading unit 405 then holds the obtained information in the connection managing unit 402 and the resource managing unit 403.

According to the third preferred embodiment of the present invention, the connection uploading unit 405 extracts the connection relationship between the NNIs of the respective NEs 101 based on the information of each NI mounted on each of the NEs 101, which is obtained by the resource managing unit 403 within the NMS 201 from each of the NEs 101.

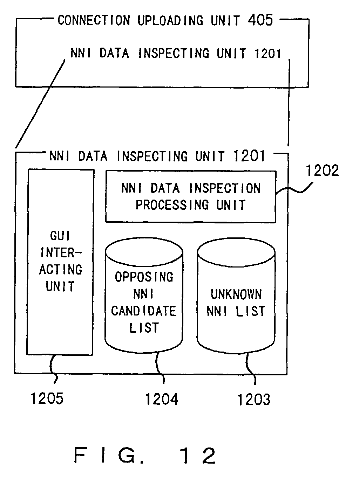

Fig. 12 is a block diagram showing the configuration of the third preferred embodiment according to the present invention.

According to the third preferred embodiment of the present invention, the connection uploading unit 405 (shown in Fig. 4) within the connection managing unit 402 included in the NMS 201 includes an NNI data inspecting unit 1201. The NNI data inspecting unit 1201 includes an NNI data inspection processing unit 1202, an unknown NNI list 1203, an opposing NNI candidate list 1204, and a GUI interacting unit 1205.

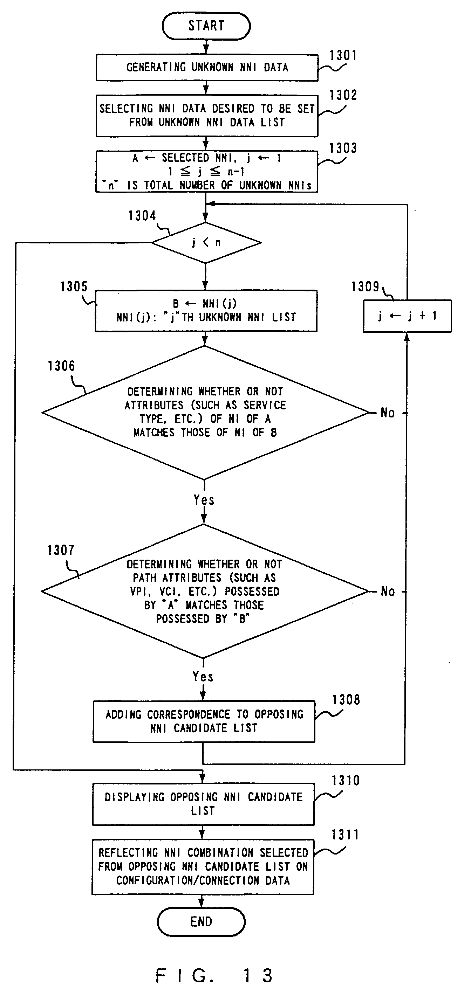

Fig. 13 is a flowchart showing the process performed by the NNI data inspection processing unit 1202.

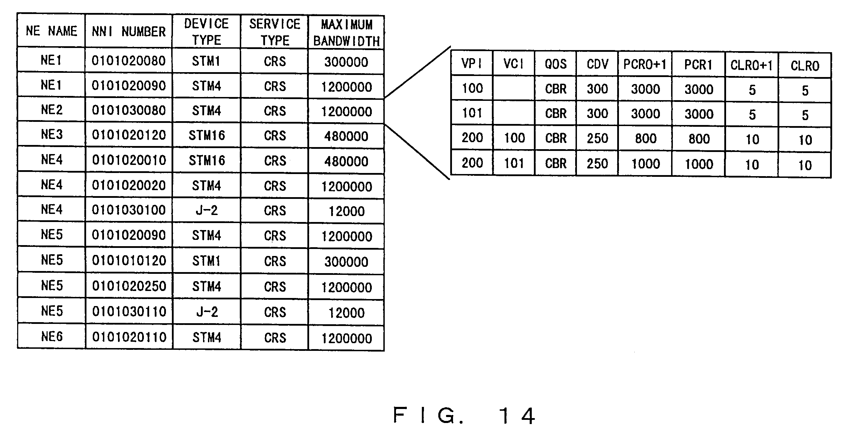

First of all, an NNI whose connection relationship to an opposing party is unknown is searched among the information of each NNI mounted on each of the NEs 101, which is collected in the resource managing unit 403, and the search result is generated as the unknown NNI list 1203 (step 1301). Fig. 14 shows the data structure of the unknown NNI list 1203. Each entry in this list includes the name of an NE 101 mounting an NI (Network Interface) corresponding to an entry, the NNI number corresponding to the NI, a device type, a service type, and a maximum bandwidth. Furthermore, the information such as the VPI (Virtual Path Identifier), the VCI (Virtual Channel Identifier), the QOS (Quality of Service), the CDV (Cell Delay Valuation), the PCR (Peak Cell Rate), the CLR (Cell Loss Rate), etc., which correspond to each entry, are included by being linked to each entry.

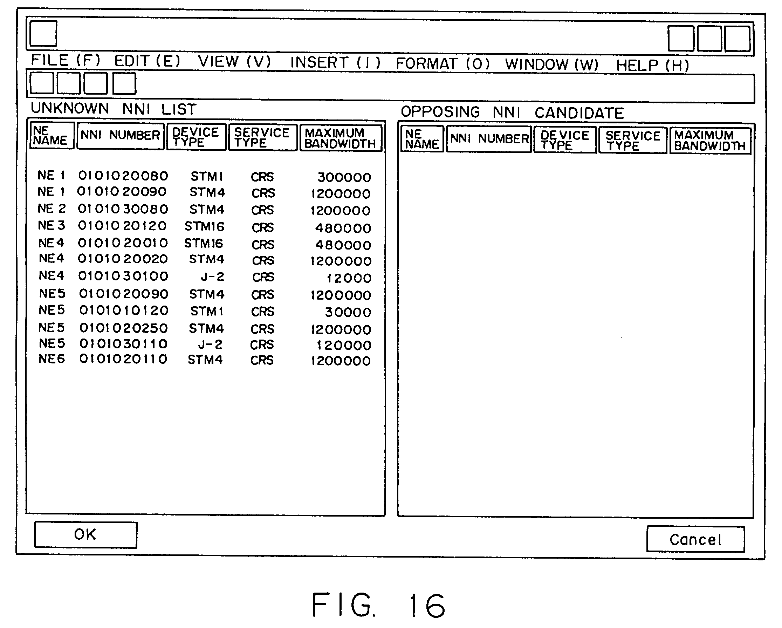

The generated unknown NNI list 1203 is then displayed for an operator via the GUI interacting unit 1205, and the selection of the NNI whose connection relationship is desired to be defined, which is made by an operator, is accepted (step 1302). Fig. 16 shows the GUI image of the unknown NNI list 1203.

Next, the content of the unknown NNI list selected by the operator is assigned to a variable "A". Additionally, "1" is assigned to a variable "j" for specifying an unknown NNI list to be referenced. Here, assume that the number of unknown NNI lists is "n", and the number of the unknown NNI list selected by the operator is sorted to be the maximum number "n". In this case, the value of the variable "j" changes from 1 to "n-1" in steps 1304 and 1309.

Then, the content NNI (j) of the "j"th unknown NNI list is first assigned to a variable "B" for each value of the variable "j" (step 1305).

Next, it is determined whether or not the attributes (such as a service type, etc. Refer to Fig. 14) other than a path attribute of the NI corresponding to the unknown NNI list which is selected and assigned to the variable "A", match those of the NI corresponding to the unknown NNI list to be compared, which is assigned to the variable "B" (step 1306).

If the result of the determination made in step 1306 is "NO", the process goes to step 1309 where the next unknown NNI list is determined.

If the result of the determination made in step 1306 is "YES", it is further determined whether or not the path attribute (such as the VPI, VCI, etc.) of the NI corresponding to the unknown NNI list which is selected and assigned to the variable "A" matches that of the NI corresponding to the unknown NNI list to be compared, which is assigned to the variable "B" (step 1307).

If the result of the determination made in step 1307 is "NO", the process goes to step 1309 where the next unknown NNI list is compared.

If the result of the determination made in step 1307 is "YES", the correspondence between the unknown NNI list which is selected and assigned to the variable "A" and the unknown NNI list to be compared, which is assigned to the variable "B", is added to the opposing NNI candidate list 1204 (step 1308). The process then goes to step 1309 where the next unknown NNI list is compared.

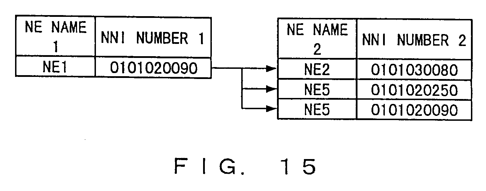

Fig. 15 shows the data structure of the opposing NNI candidate list 1204.

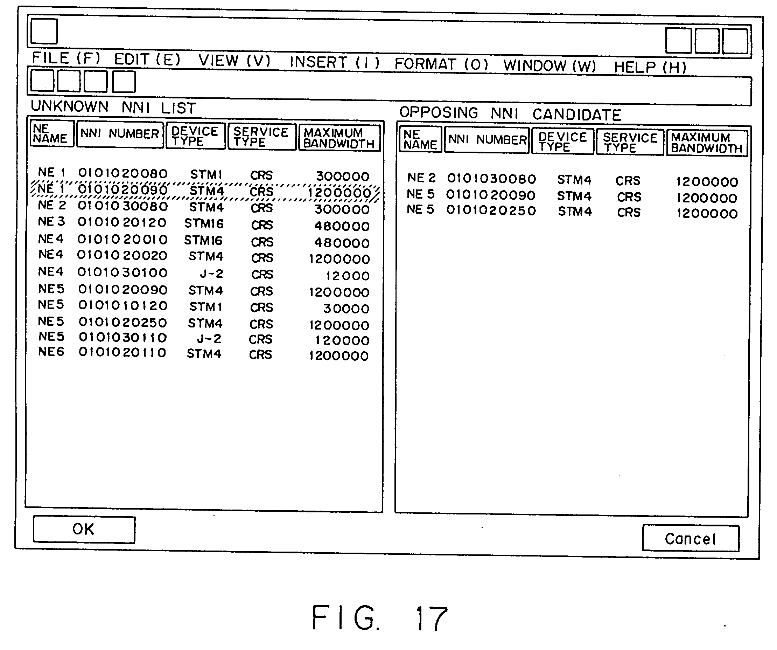

After the correspondences between the selected unknown NNI list and the other unknown NNI lists are predicted with the above described process loop in steps 1304 through 1309, the contents of the opposing NNI candidate list 1204 are displayed for the operator via the GUI interacting unit 1205. The selection of the opposing NNI list, which is made by the operator, is accepted (step 1310). Fig. 17 shows the GUI image of the opposing NNI candidate list 1204.

Then, the data of the connection relationship between the unknown NNI list selected by the operator and the opposing NNI to be connected to the selected NNI list is integrated into the data managed by the resource managing unit 403 and the connection managing unit 402 (step 1311). This data has the format, for example, "NE name 1/NNI number 1: NE name 2/NNI number 2".

As described above, according to the third preferred embodiment of the present invention, the NNI information whose connection relationship is unknown within the NMS 201 is interactively complemented by an operator based on the prediction made by the NMS 201, thereby managing the connections such as a PVC connection, an SVC connection, etc.

### 〈Fourth Preferred Embodiment According to the Present Invention〉

Provided next is the explanation about a fourth preferred embodiment according to the present invention.

The fourth preferred embodiment according to the present invention relates to the capability of the connection uploading unit 405 according to the first preferred embodiment of the present invention, which is shown in Fig. 4, and implements part of the process for extracting a PVC connection (step 608 of Fig. 6), which is performed by the connection uploading unit 405.

With the above described process represented by the flowchart shown in Fig. 6 in the first preferred embodiment of the present invention, or with the process explained by referring to Figs. 8, 9, etc. in the second preferred embodiment of the present invention, the connection uploading unit 405 (shown in Fig. 4) within the connection managing unit 402 included in the NMS 201 obtains from each of the NEs 101 configuring the ATM network the contents of the routing table 803 (shown in Fig. 8) indicating the connections within the respective NEs 101, and the information (such as bandwidth information, etc.) of each NI (Network Interface card) mounted by each of the NEs 101. The connection uploading unit 405 then holds the obtained information in the connection managing unit 402.

Furthermore, with the above described process according to the third preferred embodiment of the present invention, the connection uploading unit 405 extracts the NNI connection relationship of each of the NEs 101 based on the information of each NI mounted by each of the NEs 101, which is obtained by the resource managing unit 403 within the NMS 201 from each of the NEs 101.

According to the fourth preferred embodiment of the present invention, the connection uploading unit 405 extracts the connection relationship of a VP (Virtual Path) between the respective NEs 101 on each PVC established end-to-end in an ATM network, based on the information of the NNI connection relationship of each of the NEs 101, which is extracted by the NNI data inspecting unit 1201 that is shown in Fig. 12 and is referred to in the third preferred embodiment of the present invention, and the content of routing table 803 obtained from each of the NEs 101 in PVC connection extracting process in step 608 shown in Fig. 6.

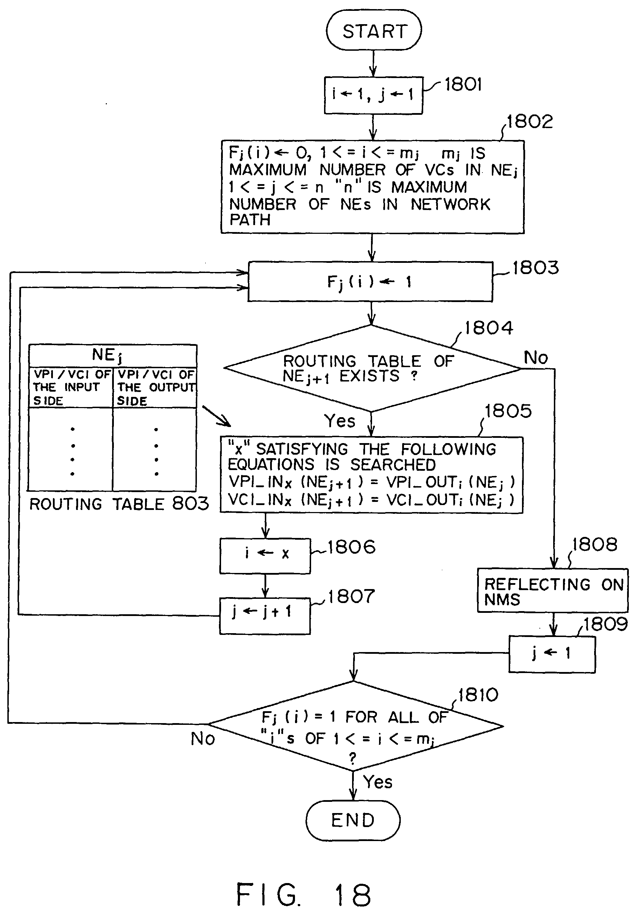

Fig. 18 is a flowchart showing the above described process for extracting a connection relationship, which is performed by the connection uploading unit 405.

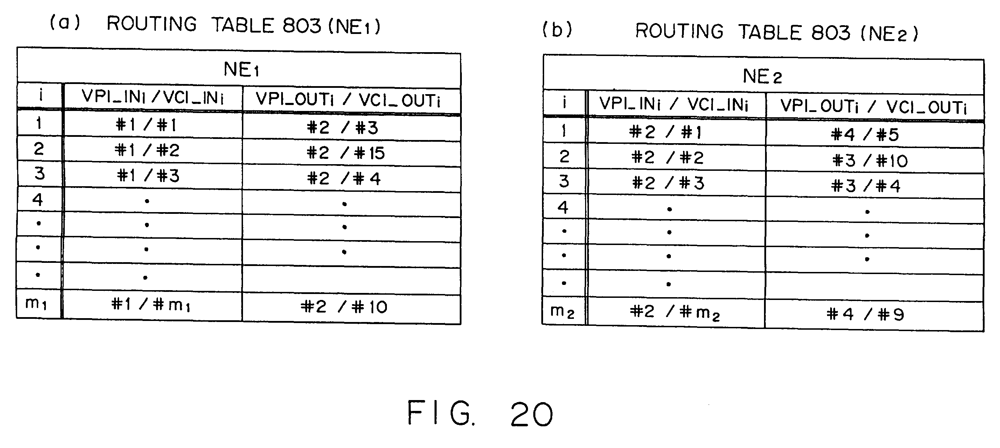

In this figure, a variable "i" is an entry number (refer to Fig. 20) in the routing table 803 which is transferred from each of the NEs 101 to the NMS 201 and is referenced in this process. A variable "j" is intended to identify the respective NEs 101 on network paths, which are referenced in this process, by numbering the NEs 101 such as NE₁, NE₂, NE₃, ... from the UNI side to be considered. The value "1" is assigned to the variables "i" and "j" as an initial value (step 1801). The maximum value of the variable "j" is the maximum number "n" of the NEs 101 on network paths. The maximum value of the variable "i" is the maximum number of VCs (Virtual Channels: logical channels) "mⱼ" of each of the NEs 101 (NEⱼ, 1≤j≤n) (step 1802). An array Fⱼ(i) is intended for setting a flag mark indicating that the "i"th entry in the routing table 803 included in the "j"th NE 101 (NEⱼ) is referenced when this entry is referenced. An initial value "0" is assigned to all of "i"s and "j"s (step 1802).

After the initial setting operation is performed, a network path configuring one PVC is searched from one of the UNI sides of a PVC network path to the other.

Firstly, the flag mark corresponding to the "i=1st" entry in the routing table 803 obtained from the "j=1st" NE 101 (NEⱼ=NE₁), is set in order to consider one VP/VC on one of the UNI sides. That is, "F₁(1)=1" is set (step 1803).

Next, it is determined whether or not there is the "j+1=2nd" NE 101 (NEⱼ₊₁=NE₂) which opposes the "j=1st" NE 101 (NEⱼ=NE₁) (step 1804). This determination process can be performed based on the information about the NNI connection relationship of each of the NEs 101, which is extracted by the NNI data inspecting unit 1201 that is shown in Fig. 12 and is explained in the third preferred embodiment.

If the result of the determination made in step 1804 is "YES", the entry having the same VPI/VCI on the input side as that on the output side in the "i=1st" entry within the routing table 803 obtained from the "j=1st" entry which is currently being processed, is searched in the routing table 803 obtained from the opposing NE 101 (NEⱼ₊₁=NE₂). That is, if the VPI/VCI on the output side in the "i=1st" entry within the routing table 803 obtained from the "j=1st" NE 101 (NEⱼ=NE₁) which is currently being processed, is defined to be the VPI/VCI on the output side=VPI_OUTᵢ(NEⱼ)/VCI_OUTᵢ(NEⱼ), and the VPI/VCI on the input side in an arbitrary "x"th entry within the routing table obtained from the opposing NE 101 **(NE**_{**j+1**}**=NE**_{**2**}**) is defined to be** VPI_INₓ(NEⱼ₊₁)/VCI_Inₓ(NEⱼ₊₁), the entry "x" which satisfies the following equations is searched (step 1805).$\begin{matrix}\begin{matrix}{\text{VPI_IN}}_{\text{x}} {\text{(NE}}_{\text{j+1}} {\text{)=VPI_OUT}}_{\text{i}} {\text{(NE}}_{\text{j}} \text{)} \\ {\text{VCI_IN}}_{\text{x}} {\text{(NE}}_{\text{j+1}} {\text{)=VCI_OUT}}_{\text{i}} {\text{(NE}}_{\text{j}} \text{)}\end{matrix}\end{matrix}$

After the above described entry "x" is searched, the searched number "x" is assigned to the target entry number "i" (step 1806). Additionally, the target NE number is incremented by 1, so that the above described opposing NE 101 (NEⱼ₊₁=NE₂) is newly recognized to be the "j"th NE 101 (NEⱼ) which is currently being processed.

Then, the process goes back to step 1803 where the flag mark corresponding to the "i="x"th" entry in the routing table 803 obtained from the "j=2nd" NE 101 (NEⱼ=NE₂), is set. That is, F₂(x)=1 is set. Next, a PVC path is continued to be searched for the "j+1=3rd" NE 101 (NEⱼ₊₁=NE₃) which newly opposes the "j=2nd" NE 101 (NE₂) (steps 1804 and 1805).

The above described search process is repeatedly performed from one of the UNI sides of one network path to immediately before the other (the process loop from step 1803 to 1807).

If it is determined that the "j+1"th NE 101 (NEⱼ₊₁) opposing the "j"th NE 101 (NEⱼ) does not exist in step 1804, that is, if one end of the "j"th NE 101 (NEⱼ) is connected to not an NNI but a UNI and this NE 101 (NEⱼ) is a termination point, the PVC path information which has been searched up to now is reflected in the NMS 201 (on the connection managing unit 402 shown in Fig. 4) (step 1808).

After "1" is again assigned to the variable "j" (step 1809), it is determined whether or not F₁(i)=1 for all of "i"s satisfying 1≤i≤mⱼ=m₁, that is, whether or not all of the entries in the routing table 803 obtained from the "j=1st" NE 101 (NEⱼ=NE₁) have been processed (step 1810).

If the result of the determination made in step 1810 is "NO", the process in and after step 1803 is repeatedly performed for entries yet to be processed and a search is performed for a new PVC path.

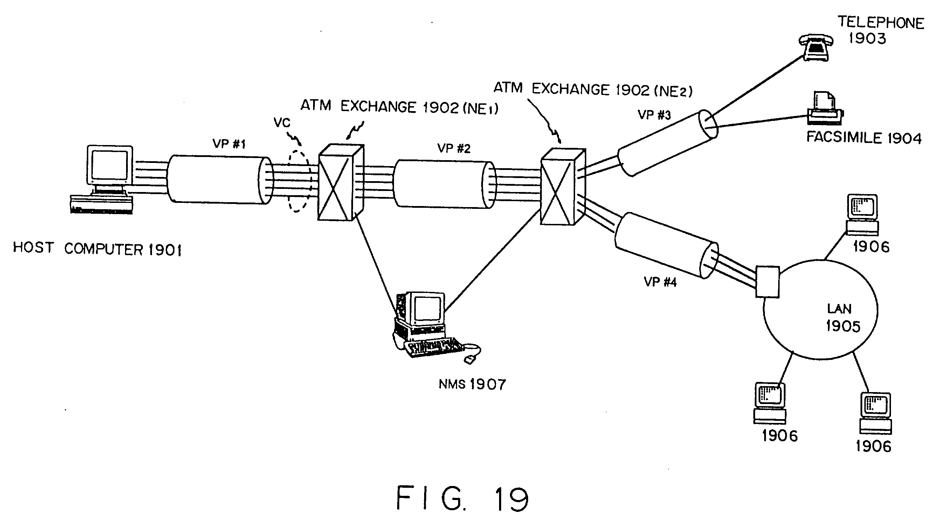

The specific example of the above described process for extracting a connection relationship will be described by referring to the examples of the ATM network shown in Fig. 19 and the routing table 803 shown in Fig. 20.

In the example shown in Fig. 19, one end on the UNI side is defined to be a host computer 1901, the other end on the UNI side, the termination end, is defined to be a telephone 1903 or a facsimile 1904, and all of the network paths leading to a plurality of terminals 1906 via a LAN 1905 are reflected in the NMS 1907, with the above described process for extracting a connection relationship, which is performed by the connection uploading unit 405 within the connection managing unit 402 included in the NMS 1907.

The following process is performed in order to reflect, for example, the entire network path from the host computer 1901 to the telephone 1903 on the NMS 1907.

Firstly, the flag mark corresponding to the "i=1st" entry in the routing table 803 (NE₁) which is shown in Fig. 20(a) and is obtained from the "j=1st" ATM exchange 1902 (NEⱼ=NE₁), is set in order to consider one VP/VC on one UNI side. That is, F₁(1) is set (step 1803 of Fig. 18).

Next, after the "j+1=2nd" ATM exchange 1902 (NEⱼ₊₁=NE₂), which opposes the "j=1st" ATM exchange 1902 (NEⱼ=NE₁), is determined to exist (step 1804 of Fig. 18), the entry "x" satisfying the following equations is searched (step 1805 of Fig. 18).$\begin{matrix}\begin{matrix}{\text{VPI_IN}}_{\text{x}} {\text{(NE}}_{\text{2}} {\text{)=VPI_OUT}}_{\text{1}} {\text{(NE}}_{\text{1}} \text{)} \\ {\text{VCI_IN}}_{\text{x}} {\text{(NE}}_{\text{2}} {\text{)=VCI_OUT}}_{\text{1}} {\text{(NE}}_{\text{1}} \text{)}\end{matrix}\end{matrix}$

VPI_OUT₁(NE₁)/VCI_OUT₁(NE₁)=#2/#3 in the routing table 803 obtained from the "j=1st" ATM exchange 1902 (NEⱼ=NE₁), as shown in Fig. 20(a). Additionally, the entry "x" which satisfies VPI_INₓ(NE₂)/VCI_INₓ(NE₂)=#2/#3 is an entry 3 in the routing table 803 obtained from the "j+1=2nd" ATM exchange 1902 (NEⱼ₊₁=NE₂), as shown in Fig. 20(b).

Consequently, the searched number x=3 is assigned to the target entry number "i" (step 1806 of Fig. 18), and the NE number to be considered "j" is incremented by "1", whereby the ATM exchange 1902 (NE₂) is newly defined to be the "j"th ATM exchange 1902 (NEⱼ) which is currently being processed.

The process then goes back to step 1803 where the flag mark corresponding to the "i=x=3rd" entry in the routing table 803 which is obtained from the "j=2nd" ATM exchange 1902 (NEⱼ=NE₂) and is shown in Fig. 20(b), is set. That is, F₂(3)=1 is set.

Since there is no ATM exchange which newly opposes the "j=2nd" ATM exchange 1902 (NE₂) and the ATM exchange 1902 (NE₂) is a termination point, the information about the PVC path "VP#1-NE₁-VP#2-NE₂-VP#3" which has been searched up to now is reflected in the NMS 201 (that is, on the connection managing unit 402 shown Fig. 4) (step 1808).

Then, after "1" is again assigned to the variable "j" (step 1809), it is determined whether or not F₁(i)=1 for all of "i"s satisfying 1≤i≤mⱼ=m₁, that is, whether or not all of the entries in the routing table 803 obtained from the "j=1st" ATM exchange 1902 (NEⱼ=NE₁) have been processed (step 1810). If the result of the determination made in step 1810 is "NO", the process in and after step 1803 is repeatedly performed for entries yet to be processed, and a new PVC path is searched.

With the above described process for extracting a connection relationship, which is performed by the connection uploading unit 405, the entire PVC data in a network can be reflected in the NMS 201 (shown in Fig. 2). As a result, the NMS 201 can identify all of PVCs used in an actual network even if an inconsistency may arise between the PVC data within the NMS 201 and that within the actual ATM network due to the introduction of an NMS 201 into a running ATM network, or to a session disconnection between a running NMS 201 and an NE 101.

### 〈Fifth Preferred Embodiment According to the Present Invention〉

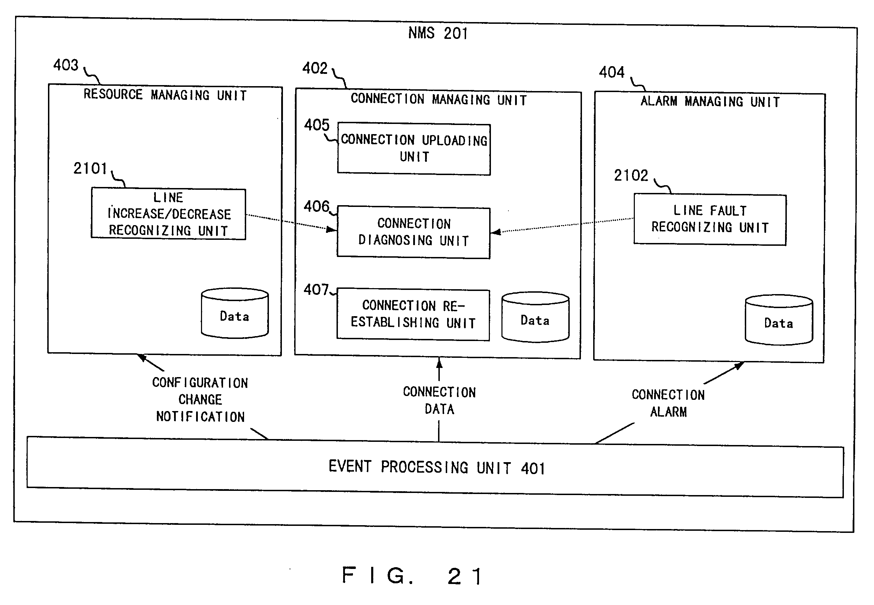

Fig. 21 is a block diagram showing the configuration of a fifth preferred embodiment according to the present invention.

A resource managing unit 403 performs the operations for the resources such as respective NEs 101, ports of the respective NEs 101, etc. within an ATM network to be managed. An alarm managing unit 404 intensively manages faults that occur within the ATM network.

A conventional NMS cannot recognize a change made to the configuration of the resources such as a port, etc. with a local operation in an EMS, and a PVC data inconsistency caused due to a DCN communication fault.

To overcome this problem, a line increase/decrease recognizing unit 2101 is arranged within the resource managing unit 403, and a line fault recognizing unit 2102 is arranged within the alarm managing unit 404, according to the fifth preferred embodiment of the present invention.

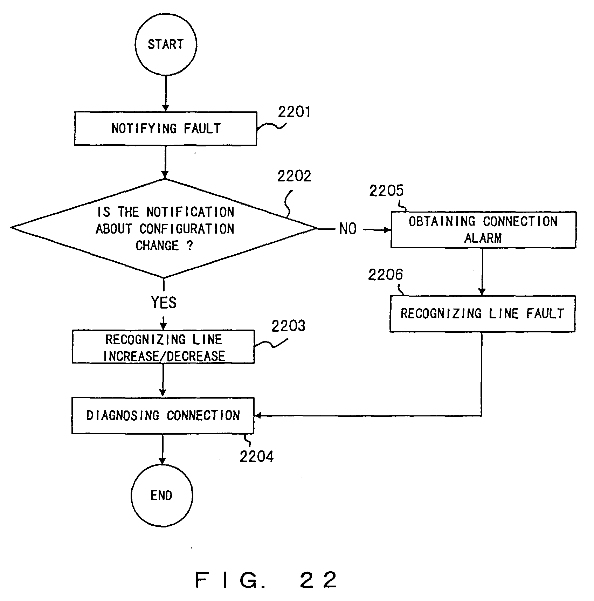

Fig. 22 is a flowchart showing the process for uploading an alarm, which is performed by the event processing unit 401, the line increase/decrease recognizing unit 2101, the line fault recognizing unit 2102, and the connection diagnosing unit 406 in the connection managing unit 402, which are shown in Fig. 21.

The event processing unit 401 receives a fault notification (step 2201).

The event processing unit 401 then determines whether or not the notification received in step 2201 is a resource configuration change from an NE 101 (step 2202).

If the result of the determination made in step 2202 is "YES", the event processing unit 401 obtains that notification and notifies the resource managing unit 403 of the configuration change notification generated based on the obtained notification. With this notification, the line increase/decrease recognizing unit 2101 in the resource managing unit 403 recognizes that a line is increased/decreased (step 2203), and notifies the connection diagnosing unit 406 within the connection managing unit 402 of this recognition result. Then, the connection diagnosing unit 406 performs a connection diagnostic process (step 2204).

If the notification that the event processing unit 401 has received in step 2201 is not the configuration change notification but a connection alarm and if the result of the determination made in step 2202 is "NO", the event processing unit 401 obtains that connection alarm (step 2205), and then notifies the alarm managing unit 404 of the connection alarm. The line fault recognizing unit 2102 within the alarm managing unit 404 therefore recognizes a line fault (step 2206), and notifies the connection diagnosing unit 406 within the connection managing unit 402 of this recognition result. The connection diagnosing unit 406 then performs a connection diagnostic process (step 2204).

In this way, according to the fifth preferred embodiment of the present invention, an alarm uploaded from the event processing unit 401 is notified to the connection managing unit 402 via the resource managing unit 403 or the alarm managing unit 404, thereby automatically invoking the connection diagnostic process.

The connection diagnosing unit 406 performs the diagnostic process for checking the missing or inconsistency of elements such as a VP/VC configuring each PVC. If the missing is detected, a connection re-establishing unit 407 establishes a new PVC path.

### 〈Sixth Preferred Embodiment According to the Present Invention〉

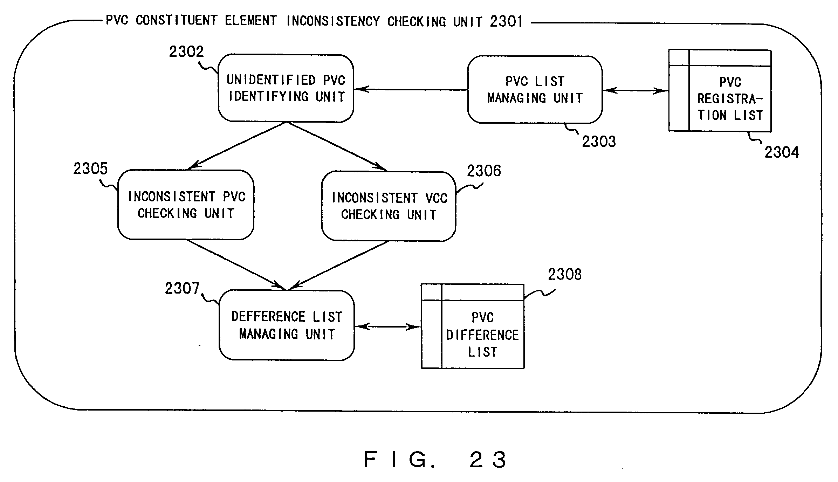

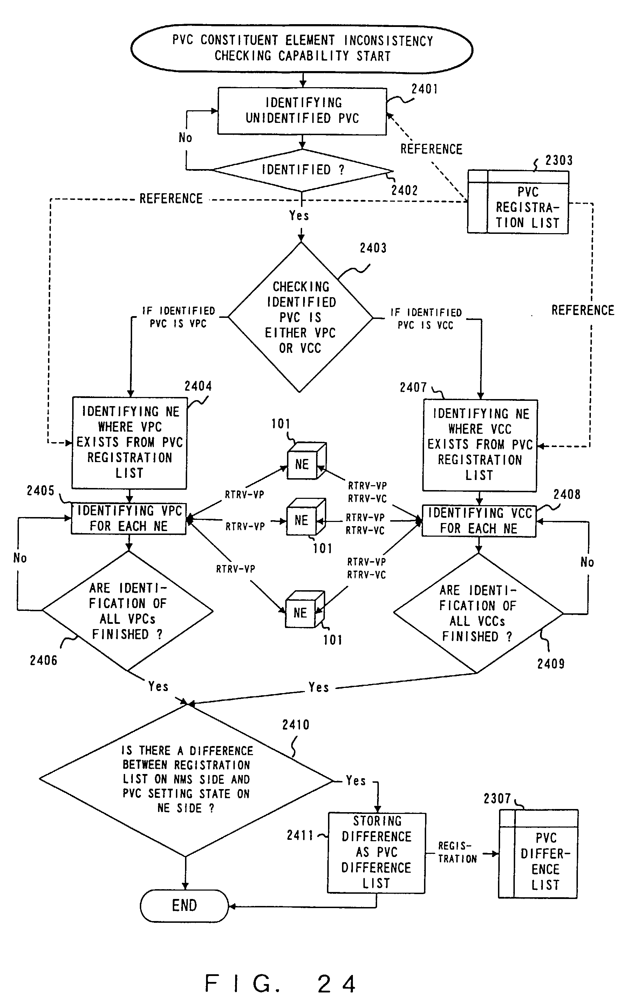

Fig. 23 is a block diagram showing the configuration of a sixth preferred embodiment according to the present invention, while Fig. 24 is a flowchart showing the process implemented by this configuration.

A PVC constituent element inconsistency checking unit 2301 shown in Fig. 23 is arranged in the connection managing unit 402 (shown in Figs. 4, 21, etc.) included in the NMS 201.

If the correspondence between the PVC registration state stored in the NMS 201 and the end-to-end PVC state registered to the NE 101 becomes indefinite due to a fault such as a network disconnection, a communication fault, an exchange or administration terminal fault, etc., the PVC constituent elements are inconsistency-checked according to the following procedure.

First of all, an unidentified PVC identifying unit 2302 determines whether or not there is an unidentified PVC due to a network disconnection, restart of a host computer, a communication error, etc. by making a comparison between the PVC registration data held on the NMS 201 side and the PVC data set on the NE 101 side, according to the PVC registration list 2304 which is preregistered to the NMS 201 via the PVC list managing unit 2303 (the process loop from steps 2401 to 2402 of Fig. 24).

If the unidentified PVC identifying unit 2302 determines that there is an unidentified PVC, it checks whether the PVC is either a VPC (Virtual Path Connection) or a VCC (Virtual Channel Connection) (step 2403 of Fig. 24).

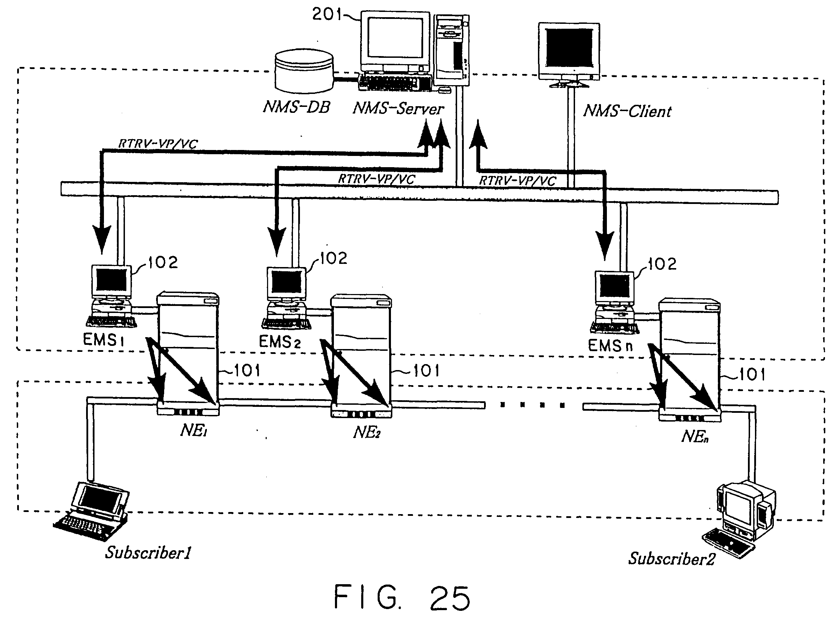

If the PVC is determined to be an unidentified VPC as a result of the checking made in step 2403, the inconsistent VPC checking unit 2305 identifies the NE 101 where this VPC exists based on the PVC registration list 2304 (step 2404 of Fig. 24), and obtains VP information by executing a command RTRV-VP for obtaining VC information for the corresponding NE 101, as shown in Fig. 25 (the process loop from steps 2405 to 2406).

If the PVC is determined to be an unidentified VCC as a result of the checking made in step 2403, an inconsistent VCC checking unit 2306 identifies the NE 101 where this VCC exists based on the PVC registration list 2304 (step 2407 of Fig. 24), and obtains VC information by executing a command RTRV-VC for obtaining VCC information for the corresponding NE 101, as shown in Fig. 25 (the process loop from steps 2408 to 2409).

After the inconsistent VPC checking unit 2305 or the inconsistent VCC checking unit 2306 completes the determination of all VPCs or all VCCs (the result of the determination made in step 2406 or 2409 of Fig. 24 "YES"), it determines whether or not there is a difference between the PVC registration list 2304 on the NMS 201 side and the PVC setting state on the NE 101 side (step 2410).

If the inconsistent VPC checking unit 2305 or the inconsistent VCC checking unit 2306 determines that there is a difference, it stores the difference information corresponding to the difference in a PVC difference list 2308 via a difference list managing unit 2307 (step 2411).

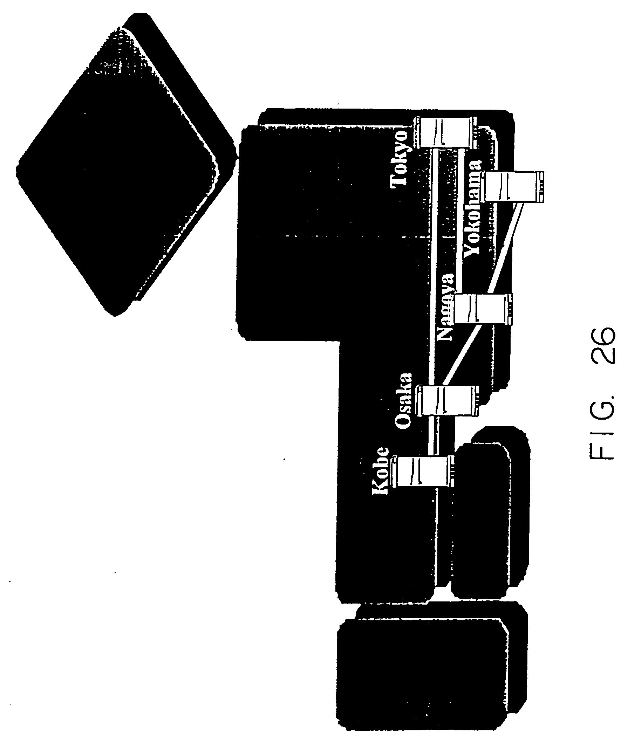

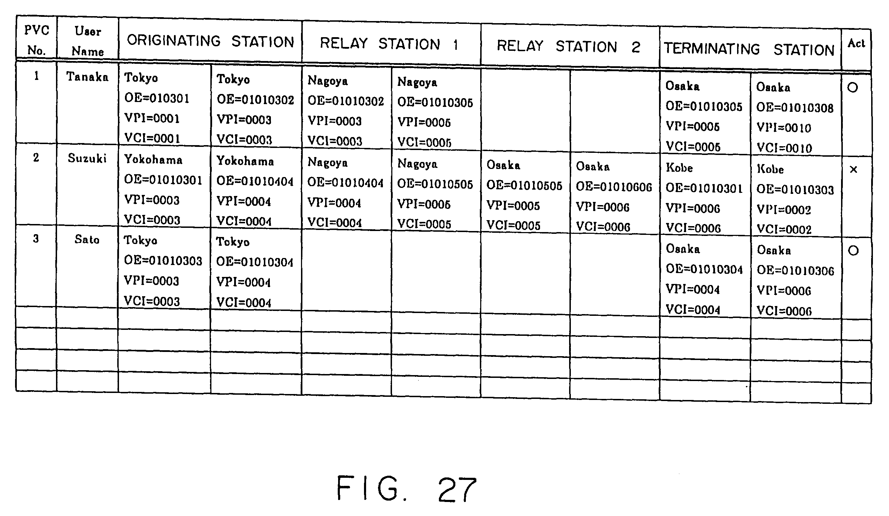

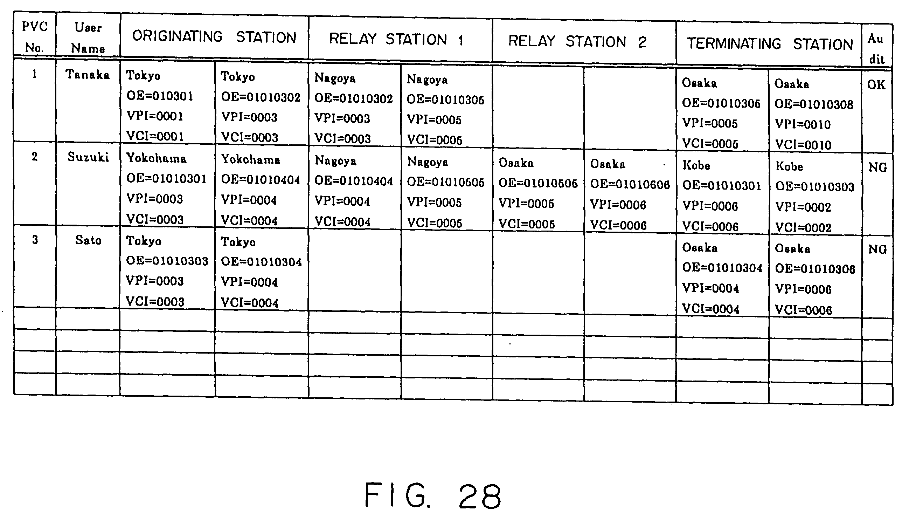

Here, assume that the NMS 201 possesses the PVC registration list 2304 including the contents shown in Fig. 27, for example, for a network image shown in Fig. 26. "○" or "X" included in an item "Act" indicates whether the PVC in an entry is either active or inactive, in Fig. 27. "OE (Office Equipment)" indicates the identification number of an NI (Network Interface) card. If the above described inconsistency checking of a PVC constituent element is performed, a command RTRV-VP/VC for obtaining the information of a VPC/VCC is executed for each originating station, relay station, and terminating station. As a result, the occurrence of an inconsistency, for example, in the PVC data enclosed by a double-line in Fig. 28 is detected.

As described above, even if an inconsistency between the PVC data registered to the NMS 201 side and that stored on the NE 101 side, arises due to a network disconnection between the NE 101 to be monitored and the NMS 201, restart of the NE 101, a local operation performed by the EMS 102 for the NE 101, etc., the PVC constituent element inconsistency checking unit 2301 extracts a difference, and can perform restoration by using the difference information depending on need.

### 〈Seventh Preferred Embodiment According to the Present Invention〉

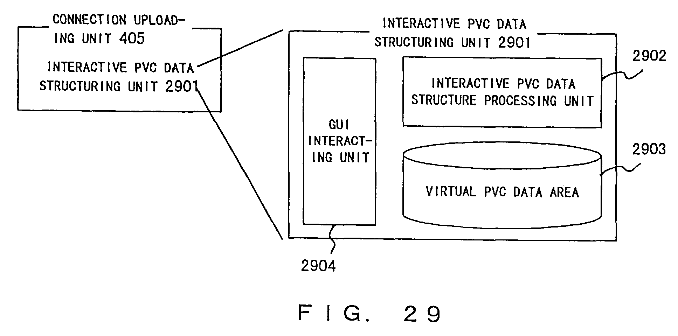

Fig. 29 is a block diagram showing the configuration of a seventh preferred embodiment according to the present invention.

According to the seventh preferred embodiment of the present invention, an interactive PVC data structuring unit 2901 is arranged within the connection uploading unit 405 (shown in Fig. 4). The interactive PVC data structuring unit 2901 includes an interactive PVC data structure processing unit 2902, a virtual PVC data area 2903, and a GUI interacting unit 2904.

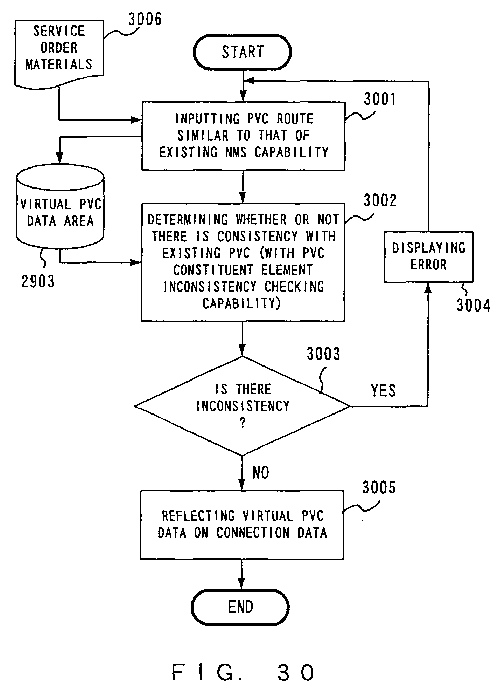

Fig. 30 is a flowchart showing the process performed by the interactive PVC data structure processing unit 2902.

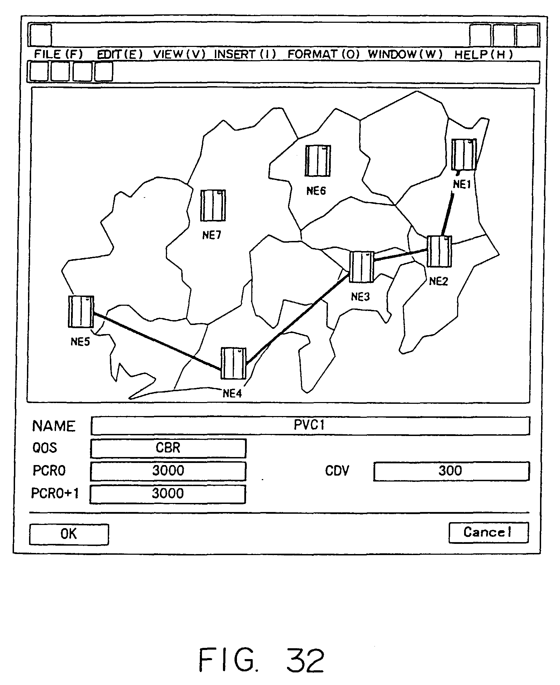

First of all, the interactive PVC data structure processing unit 2902 displays a GUI screen shown in Fig. 32 for an operator by using the GUI interactive processing unit 2904. The operator can set up a virtual PVC with a capability similar to a typical PVC set-up capability by sequentially selecting the NEs and NIs for relaying an end-to-end PVC and by inputting the respective VPIs/VCIs on the GUI image, based on the materials 3006 stored as a service order of a running ATM network. As a result, the virtual PVC data is generated in the virtual PVC data area 2903 (step 3001).

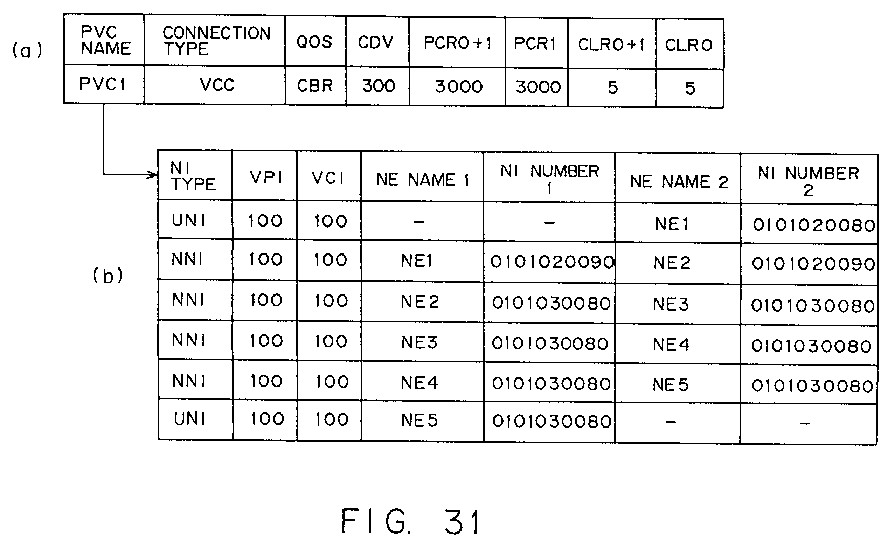

The virtual PVC data has the data structure shown in Fig. 31, and has the attributes (shown in Fig. 31(a)) of an entire end-to-end PVC and the attributes (shown in Fig. 31(b)) required for the respective connections configuring the PVC.

Next, it is determined with the PVC constituent element inconsistency checking capability referred to in the sixth preferred embodiment according to the present invention, whether or not there is an inconsistency by making a comparison between the above described virtual PVC data stored in the virtual PVC data area 2903 and the PVC which actually exists in the network (step 3002).

If it is determined that there is an inconsistency with the PVC which actually exists, this information is displayed for the operator (step 3004), and the display screen reverts to the virtual PVC setting screen (step 3001).

If it is determined that there is no inconsistency with the PVC which actually exists, the virtual PVC data is reflected in the connection data managed by the connection managing unit 402 included in the NMS 201 (step 3005).

As described above, the PVC data which exists not in the NMS 201 but in an actual ATM network can be interactively input and reflected in the NMS 201, according to the seventh preferred embodiment of the present invention.

### 〈Eighth Preferred Embodiment According to the Present Invention〉

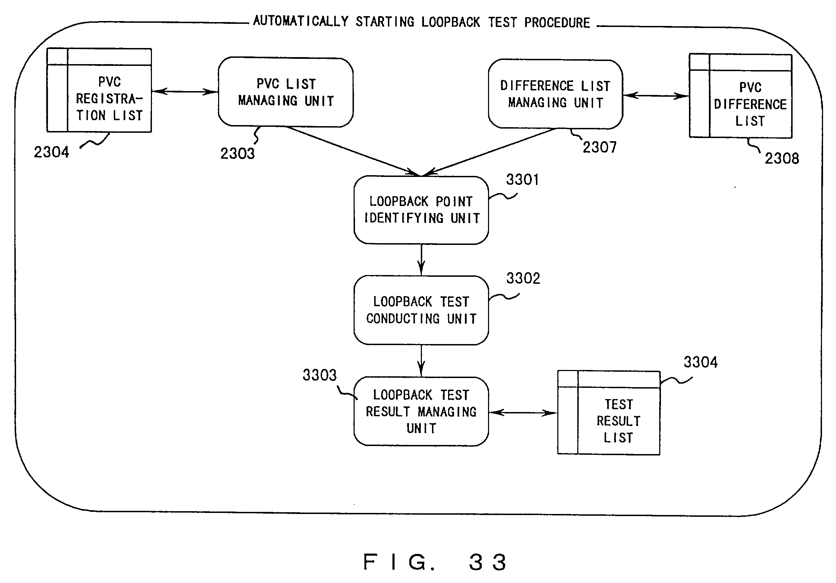

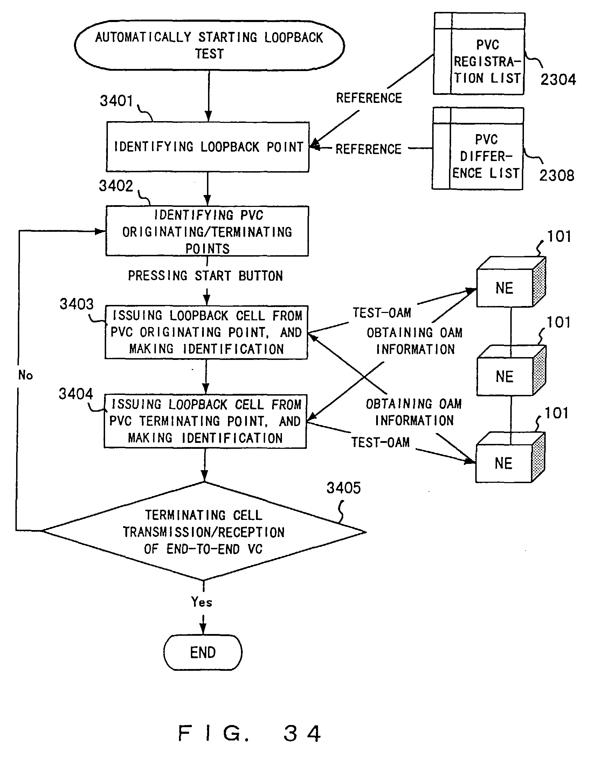

Fig. 33 is a block diagram showing the configuration of an eighth preferred embodiment according to the present invention, while Fig. 34 is a flowchart showing the process implemented by this configuration.

According to the above described sixth preferred embodiment of the present invention, it is unclear that a PVC is securely established end-to-end, judging from only the PVC data obtained for each NE 101. Therefore, according to the eighth preferred embodiment of the present invention, a loopback test is conducted for an end-to-end PVC or mainly for an unclear portion of the PVC, thereby verifying the end-to-end continuity of the PVC.

First of all, a loopback point identifying unit 3301 identifies a loopback point by obtaining the PVC registration list 2304 held by the NMS 201, and the PVC difference list 2308 (refer to Fig. 23) generated with the operations according to the sixth preferred embodiment of the present invention via the PVC list managing unit 2303 and the difference list managing unit 2307 (step 3401 of Fig. 34).

Then, a loopback test conducting unit 3302 starts a loopback test for an end-to-end PVC or an unclear portion of the PVC based on the result of the above described determination.

The loopback test conducting unit 3302 identifies the NE 101 which originates the PVC and the network which terminates the PVC (step 3402).

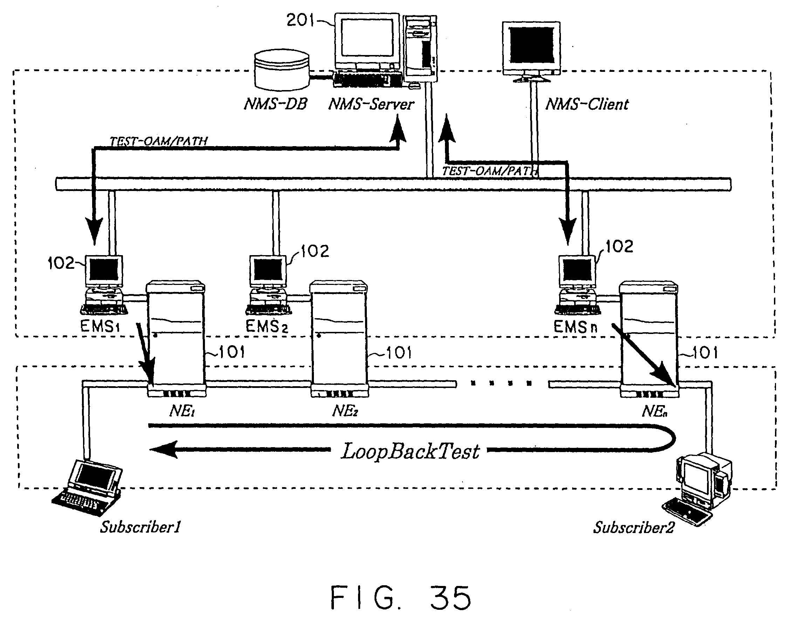

Next, the loopback test conducting unit 3302 executes the command for issuing a loopback cell (TEST-OAM/PATH shown in Fig. 35) for the NE 101 which originates the PVC and obtains the resultant information from the NE 101 which terminates the PVC (step 3403).

Similarly, the loopback test conducting unit 3302 executes the command for issuing a loopback cell for the NE 101 which terminates the PVC, and obtains the resultant information from the NE 101 which originates the PVC (step 3404).

In this way, continuity verification is bidirectionally made (refer to Fig. 35).

If the result of the continuity test is "NG", the disconnection at a halfway point is expected. Therefore, a repetition test such as the loopback test conducted between the originating station and the relay station 1, the loopback test conducted between the relay station 1 and the relay station 2, and the loopback test conducted between the relay station 2 and the terminating station, is conducted, for example, based on the PVC registration data which is referred to in the sixth preferred embodiment according to the present invention and is shown in Fig. 27 (steps 3402 to 3405). By narrowing the verification range of the loopback test as described above, it can be determined where the PVC is disconnected.

The result of the loopback test is stored by a loopback test result managing unit 3303 in a test result list 3304 as loopback test result information.

As described above, the portion where a continuity test (loopback test) must be conducted is detected based on the PVC data stored on the NMS 201 side and the PVC difference information detected by the PVC constituent element inconsistency checking capability, thereby re-registering (re-establishing) the PVC to the corresponding NE 101, and detecting the PVC point which is unused despite being connected.

### 〈Ninth Preferred Embodiment According to the Present Invention〉

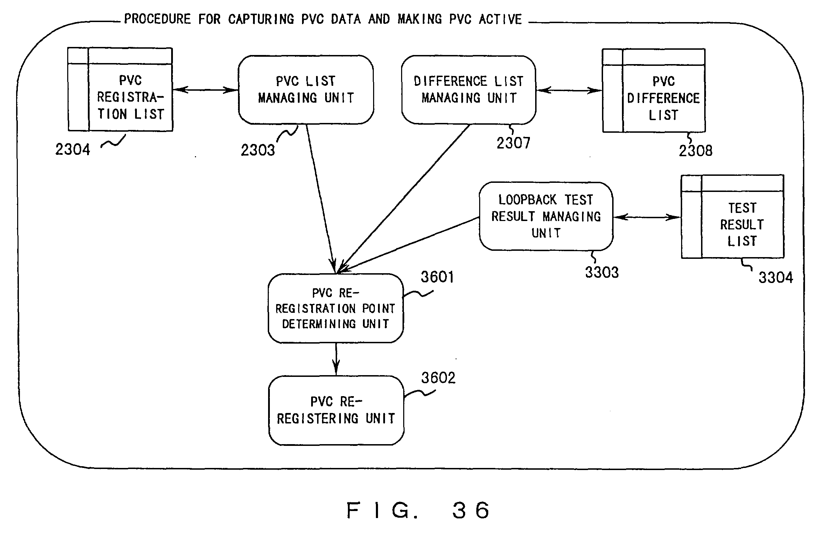

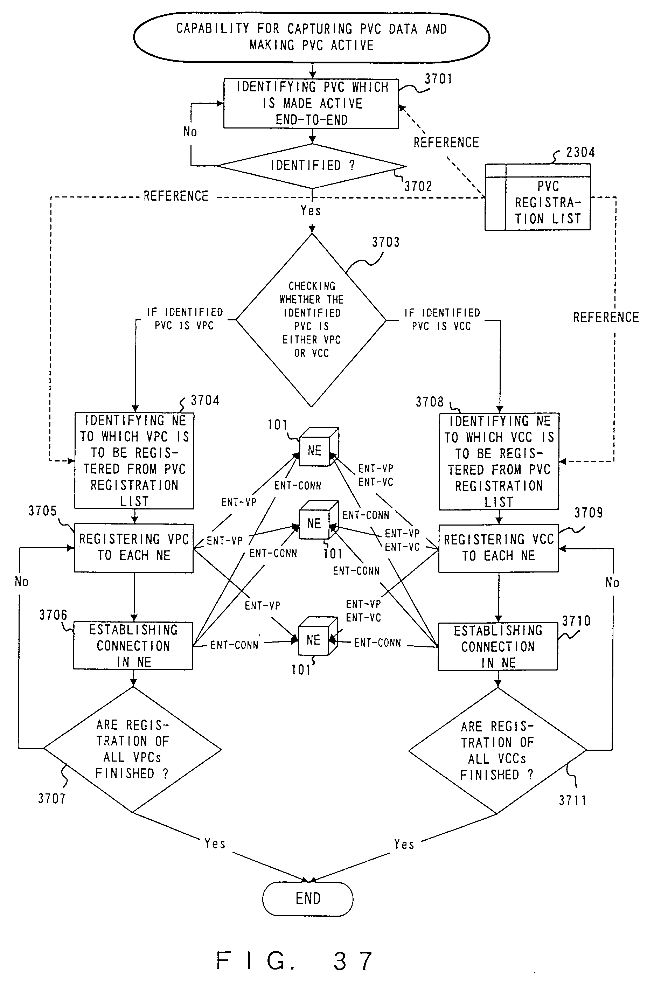

Fig. 36 is a block diagram showing the configuration of a ninth preferred embodiment according to the present invention, while Fig. 37 is a flowchart showing the process implemented by this configuration.

According to the ninth preferred embodiment of the present invention, a PVC re-registration point determining unit 3601 identifies the point at which a PVC must be re-registered, that is, the PVC which is not made active end-to-end, by obtaining the PVC registration list 2304 held on the NMS 201 side, the PVC difference list 2308 obtained with the operations according to the sixth preferred embodiment of the present invention, the test result list 3304 obtained with the operations according to the eighth preferred embodiment of the present invention via the PVC list managing unit 2303, the difference list managing unit 2307, and the loopback test result managing unit 3303 (the process loop from steps 3701 to 3702 of Fig. 37).

If the PVC re-registration point determining unit 3601 identifies a PVC for which re-registration is required, it checks whether this PVC is either a VPC or a VCC (step 3703 of Fig. 37).

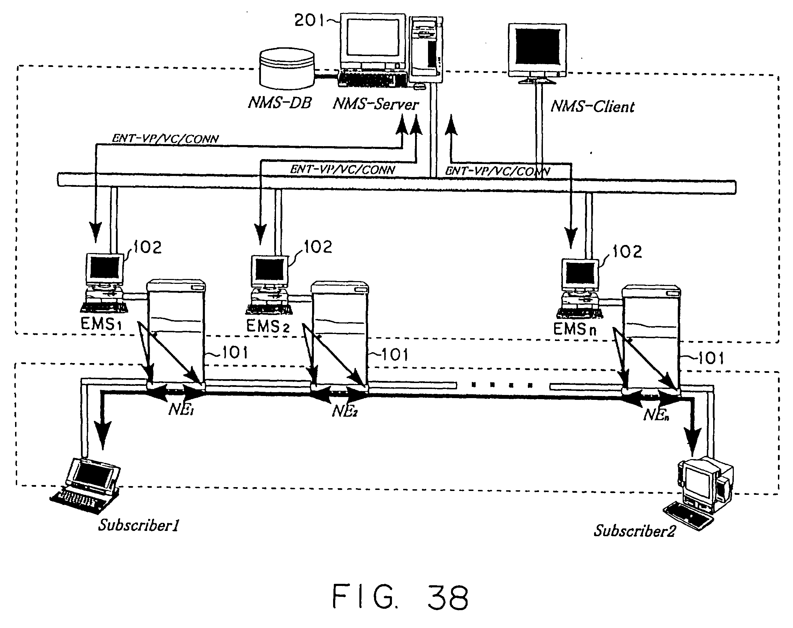

If the PVC is a VPC as a result of the checking made in step 3703, a PVC re-registering unit 3602 identifies the NE 101 to which the VPC is to be re-registered from the PVC registration list (step 3704 of Fig. 37), executes a command ENT-VP for setting up a VPC (step 3705) for the NE 101 as shown in Fig. 38, and further executes a command ENT-CONN for establishing a connection within the NE 101 (steps 3706 and 3707).

If the PVC is a VCC as a result of the checking made in step 3703, the PVC re-registering unit 3602 identifies the NE 101 to which the VCC is to be registered from the PVC registration list 2304 (step 3708 of Fig. 37), executes a command ENT-VP/ENT-VC for setting up a VCC for the NE 101 as shown in Fig. 38 (step 3709), and further executes a command ENT-CONN for establishing a connection within the NE 101 (steps 3710 and 3711).

In this way, the point at which re-registration (re-establishment) is required or the PVC which is not continuous end-to-end is requested to be re-registered, thereby enabling restoration.

### 〈Tenth Preferred Embodiment According to the Present Invention〉

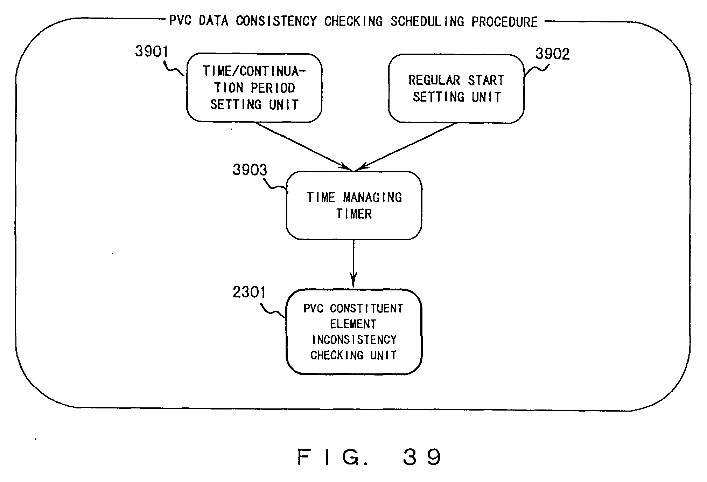

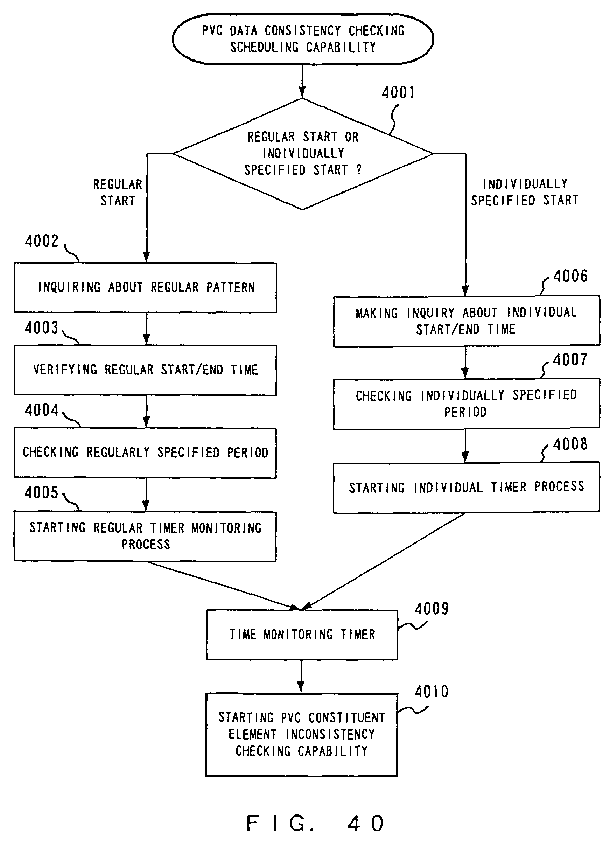

Fig. 39 is a block diagram showing the configuration of a tenth preferred embodiment according to the present invention, while Fig. 40 is a flowchart showing the process implemented by this configuration.

According to the tenth preferred embodiment of the present invention, a time/continuation period setting unit 3901 and a periodical start setting unit 3902 are arranged in order to start the PVC constituent element inconsistency checking capability implemented according to the sixth preferred embodiment of the present invention automatically and periodically or depending on need, and the PVC constituent element inconsistency checking unit 2301 (shown in Fig. 23) is started by a time managing timer 3903.

First of all, the time managing timer 3903 determines whether a specified start is either a periodical start or an individually specified start, when making the consistency checking of PVC data (step 4001 of Fig. 40).

If the periodical start is determined to be specified, the time managing timer 3903 inquires of a periodical start setting unit 3902 about a periodical pattern (step 4002).

Next, the time managing timer 3903 verifies a start time and an end time (step 4003).

The time managing timer 3903 then checks whether or not it becomes the periodically specified time (step 4004), and starts a periodical timer monitoring process when the start time comes (step 4005).

As a result, the time monitoring timer begins to operate (step 4009), the PVC constituent element inconsistency checking capability according to the sixth preferred embodiment of the present invention is started (step 4010).

If the individually specified start is designated, the time monitoring timer inquires the time/continuation period setting unit 3901 about an individual start/end time (step 4006).

Next, the time managing timer 3903 checks whether or not it becomes an individually specified time (step 4007), and starts an individual timer monitoring process when the start time comes (step 4008).

As a result, the time monitoring timer begins to operate (step 4009), and the above described PVC constituent element inconsistency checking capability implemented according to the sixth preferred embodiment of the present invention is started (step 4010).

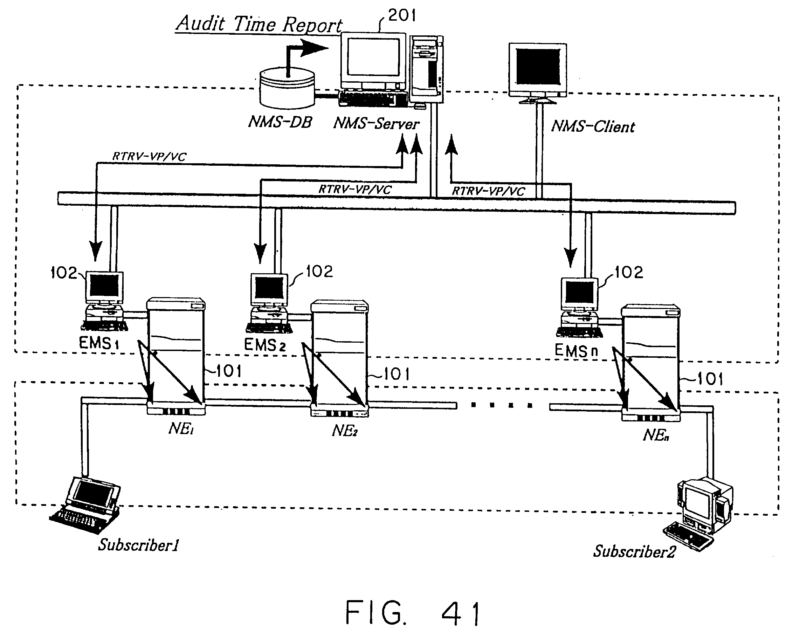

By attaching the capability of an automatic start or of an individual start to the PVC constituent element inconsistency checking capability as described above, the PVC configuration can be identified even in the nighttime or even if few administrators are present. This eliminates the inconsistency between the PVC data on the NMS 201 side and that on the NE 101 side (refer to Fig. 41).

### 〈Eleventh Configuration According to the Present Invention〉

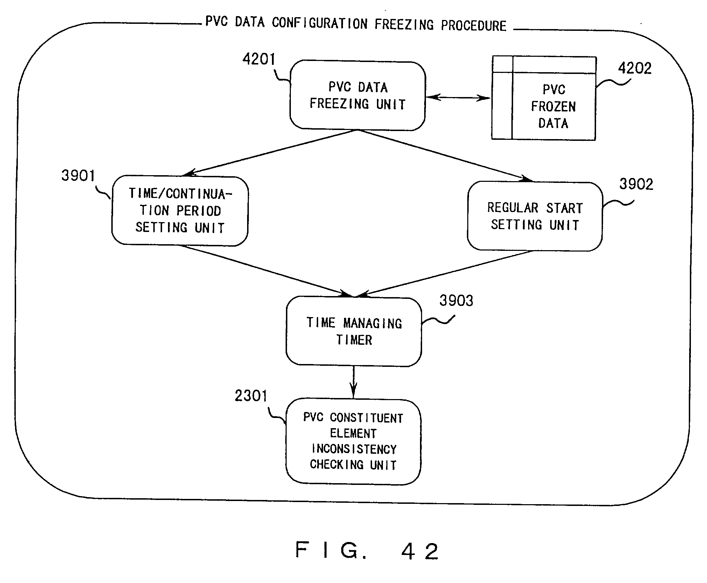

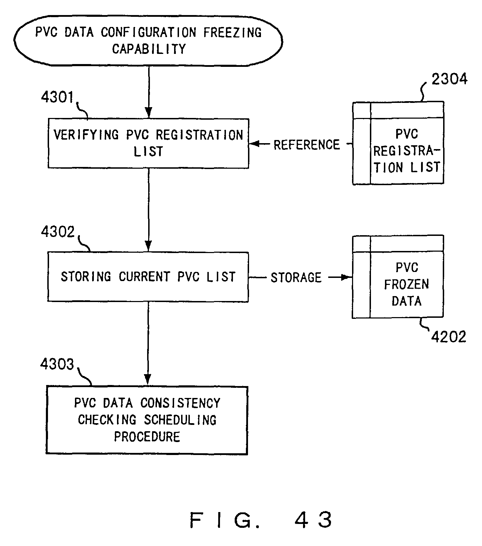

Fig. 42 is a block diagram showing the configuration of an eleventh preferred embodiment according to the present invention, while Fig. 43 is a flowchart showing the process implemented by this configuration.

According to the eleventh preferred embodiment, the PVC registration list 2304 (shown in Fig. 23), the PVC difference list 2308 (shown in Fig. 23), and the test result list 3304 of the loopback test (shown in Fig. 33) are stored as PVC frozen data 4202 beforehand by a PVC data freezing unit 4201 with the PVC data inconsistency checking scheduling referred to in the tenth preferred embodiment according to the present invention, when the PVC constituent element inconsistency checking capability referred to in the sixth preferred embodiment according to the present invention is started.

First of all, the PVC data freezing unit 4201 identifies the current PVC registration state of the PVC registration list 2304 (step 4301), and stores the current PVC registration list 2304 as the PVC frozen data 4202 (step 4302). The PVC data freezing unit 4201 performs similar operations also for the PVC difference list 2308 and the test result list 3304.

Then, the PVC data inconsistency checking scheduling procedure referred to in the tenth preferred embodiment according to the present invention is executed (step 4303).

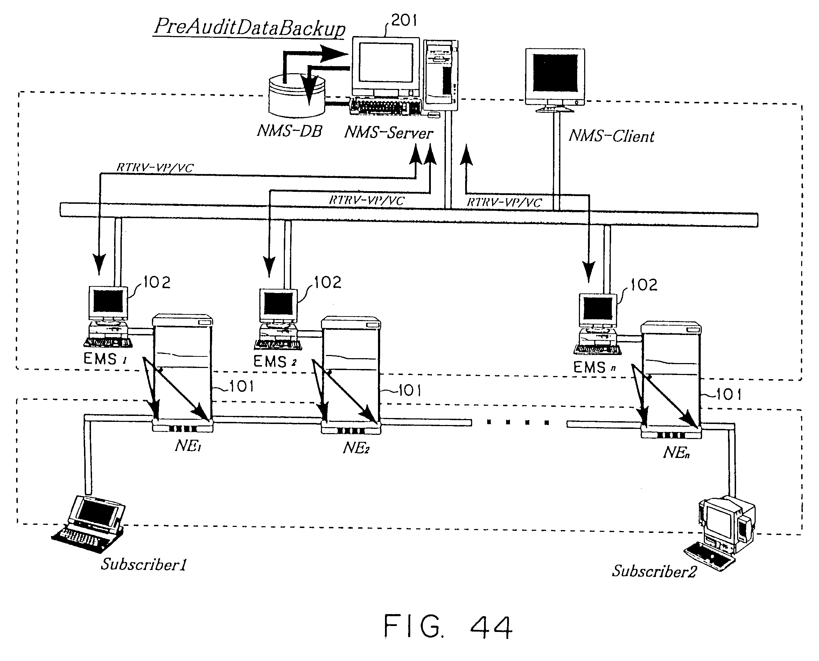

As described above, according to the eleventh preferred embodiment of the present invention, the current PVC data is stored and frozen in advance before consistency checking is started, whereby a PVC can be restored or reverted to its previous state if a schedule is inadequately arranged or if registration information data is destroyed (Fig. 44).

### 〈Twelfth Preferred Embodiment According to the Present Invention〉

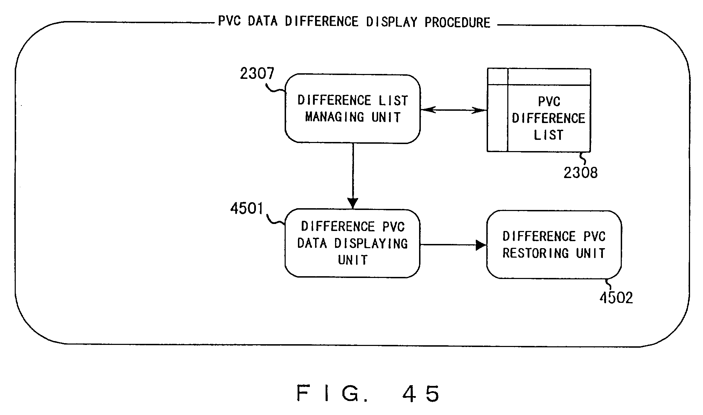

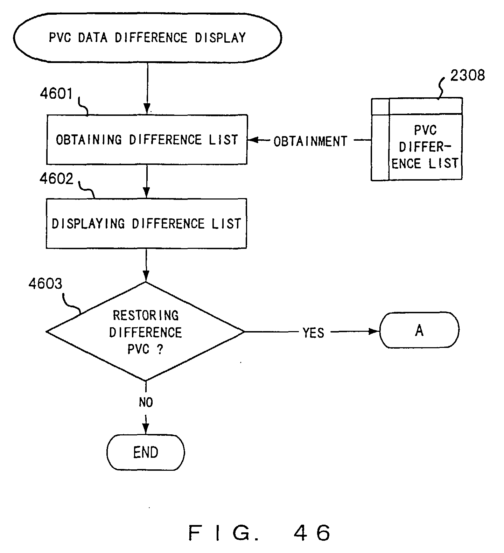

Fig. 45 is a block diagram showing the configuration of a twelfth preferred embodiment according to the present invention, while Figs. 46 through 49 are flowcharts showing the processes implemented by this configuration.

If there is a difference between the PVC registration state on the NMS 201 side and that on the NE 101 side, which is detected by the PVC constituent element inconsistency checking capability according to the sixth preferred embodiment of the present invention, this difference is stored in the PVC difference list 2308 as PVC difference information.

According to the twelfth preferred embodiment of the present invention, this difference information is displayed by a difference PVC data displaying unit 4501 via the difference list managing unit 2307.

If the previous PVC data is desired to be restored from the PVC difference information, a difference PVC restoring unit 4502 can restore an end-to-end PVC.

The difference PVC data displaying unit 4501 obtains the PVC difference information from the PVC difference list 2308 stored with the PVC constituent element inconsistency checking capability (step 4601 of Fig. 46), and displays the PVC difference list 2308 (step 4602).

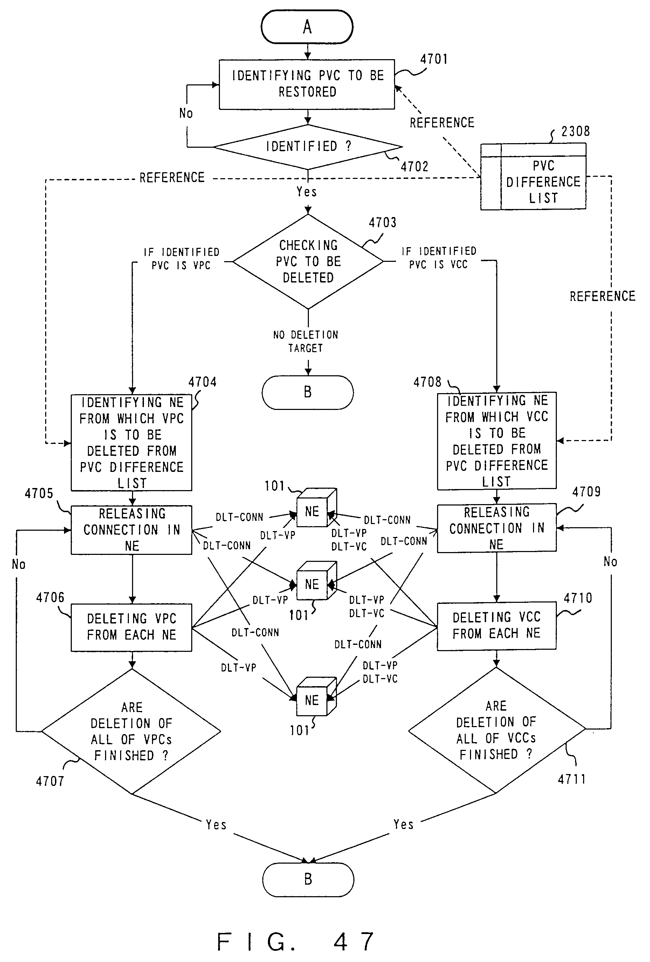

If an operator selects the restoration of the difference PVC, the difference PVC restoring unit 4502 is activated (step 4603 of Fig. 46 to step 4701 of Fig. 47).

First of all, the PVC to be restored is identified by referencing the PVC difference list 2308 via the difference list managing unit 2307 (the process loop from steps 4701 to 4702). Then, it is determined whether or not there is a PVC which is currently connected and is a deletion target, and whether a PVC is either a VPC or a VCC if there is such a PVC (step 4703).

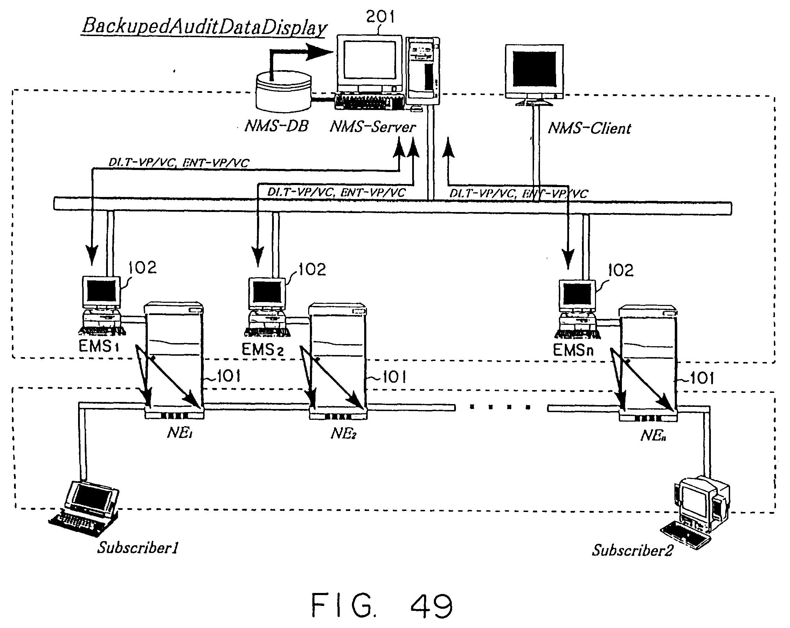

If there is the VPC which is a deletion target PVC, the NE 101 from which this VPC is to be deleted is identified from the PVC difference list 2308 via the difference list managing unit 2307 (step 4704), a command DLT-CONN for releasing the connection in that NE 101 is executed for the corresponding NE 101 (step 4705), and a command DLT-VP for deleting the VPC is further executed as shown in Fig. 49 (steps 4706 and 4707).

If there is a VCC which is a deletion target PVC, the NE 101 from which the VCC is to be deleted is identified from the PVC difference list 2308 via the difference list managing unit 2307 (step 4708), the command DLT-CONN for releasing the connection in the NE 101 is executed for the corresponding NE 101 (step 4709), and a command DLT-VC for deleting a VCC is further executed as shown in Fig. 49 (steps 4710 and 4711).

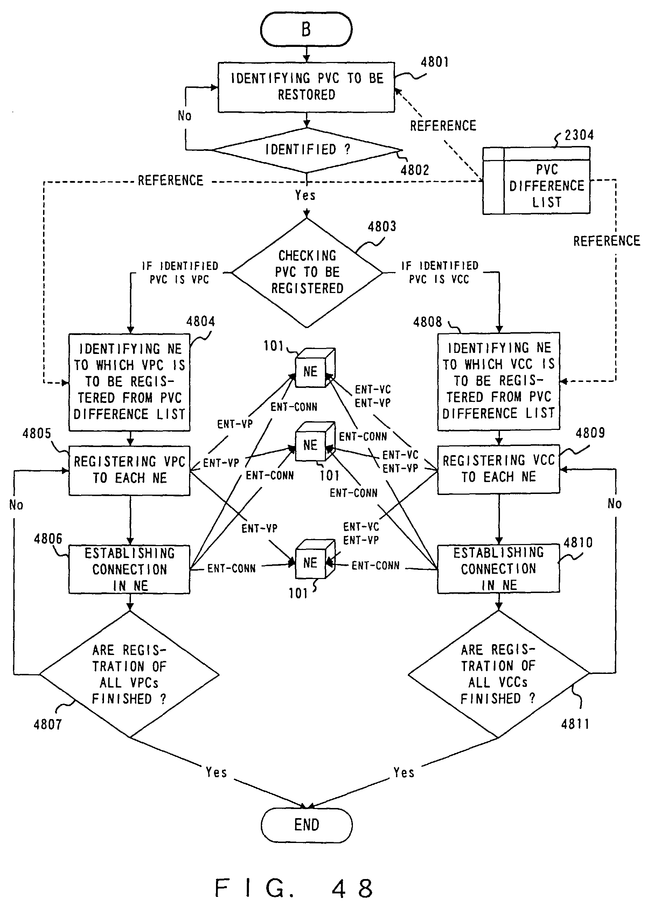

If there is no deletion target PVC and there is a registration target PVC (step 4703 to step 4801 of Fig. 48), the PVC to be restored is identified by referencing the PVC difference list 2308 via the difference list managing unit 2307 (the process loop from steps 4801 to 4802 of Fig. 48), and it is determined whether the PVC which is currently connected and is a registration target is either a VPC or a VCC (step 4803).

If there is a VPC which is a registration target PVC, the NE 101 to which this VPC is to be registered is identified from the PVC difference list 2308 via the difference list managing unit 2307 (step 4804), a command ENT-VP for establishing a VPC is executed for the corresponding NE 101 (step 4805), and a command ENT-CONN for establishing a connection within the NE 101 is further executed (steps 4806 and 4807), as shown in Fig. 49.

If the above described PVC is a VCC as a result of the determination made in step 4803, the NE 101 to which this VCC is to be registered is identified from the PVC difference list 2308 (step 4808), a command ENT-VP/ENT-VC for establishing a VCC is executed for the corresponding NE 101 as shown in Fig. 49 (step 4809), and a command ENT-CONN for establishing a connection within the NE 101 is further executed (steps 4810 and 4811).

As described above, according to the twelfth preferred embodiment of the present invention, a PVC which is a difference is restored by using the PVC difference list 2308 stored with the PVC constituent element inconsistency checking capability, thereby detecting which PVC or which point of the PVC is locally established, or the point which is discontinuous, and restoring the detected PVC or point.

### 〈Thirteenth Preferred Embodiment According to the Present Invention〉

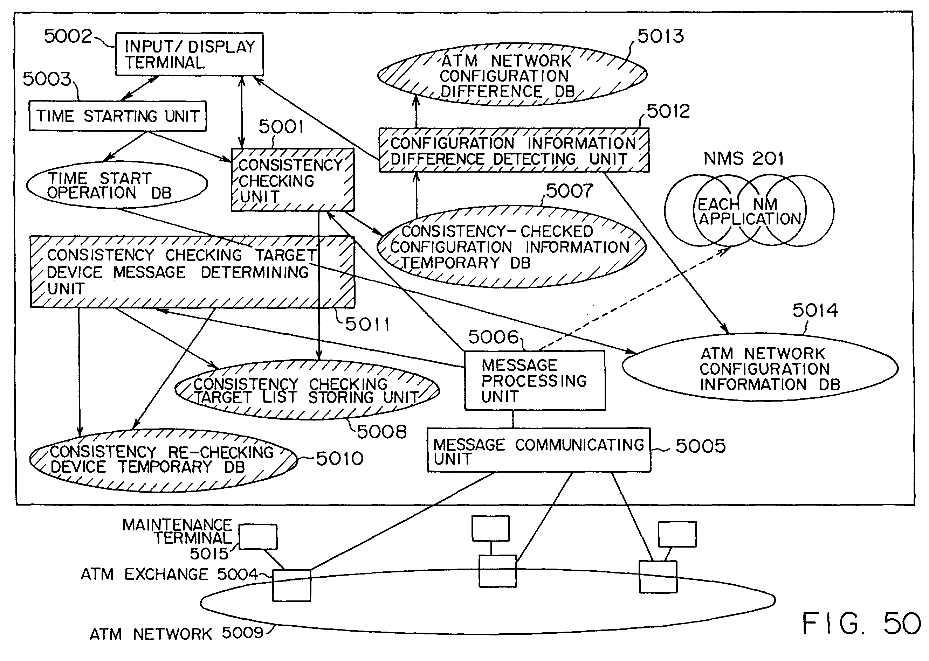

Fig. 50 is a block diagram showing the configuration of a thirteenth preferred embodiment according to the present invention.

According to the thirteenth preferred embodiment of the present invention, the capability of the NMS 201 is applied not only to the process for comprehensively managing a PVC which is established end-to-end and for maintaining a consistency thereof, but also to the process for comprehensively managing general constituent elements of an ATM network and for maintaining a consistency thereof.

A consistency checking unit 5001 receives a consistency checking request from an input/display terminal 5002 and a time starting unit 5003, obtains the device configuration information and the connection information stored in an ATM exchange 5004 configuring an actual ATM network 5009 to be managed from the ATM exchange 5004 via a message communicating unit 5005 and a message processing unit 5006, and stores these information in a consistency checked configuration information temporary DB 5007. At this time, the consistency checking target device name or the ATM connection name which is included in the consistency checking request and is received from the input/display terminal 5002 and the time starting unit 5003 is stored in a consistency checking target list storing unit 5008 to be described later.

The type of a consistency checking target that the consistency checking unit 5001 accepts from the input/display terminal 5002 and the time starting unit 5003 includes the following two major types:
- A device configuring an ATM network 5009
- An ATM connection configured in the ATM network 5009 via one or more ATM exchanges 5004

The consistency checking unit 5001 can receive the following arguments for the above described two types of the consistency checking target.

### (1) In the case where a consistency checking target is a device configuring the ATM network 5009.

- The range of an ATM network configuring device to be consistency-checked

For example, all of or one or more specified ATM exchanges 5004 configuring the ATM network 5009, or all of or one or more frames, shelves, or ATM network interface devices configuring an ATM exchange 5004.
- The type of an ATM network configuring device to be consistency-checked

For example, only a particular type of an ATM network interface device to be consistency-checked, or an ATM exchange 5004 having a particular version or type number

### (2) In the case where a consistency checking target is an ATM connection.

- The type of an ATM connection to be consistency-checked. For example, all of or one or more specified CRS connections (VPCs or VCCs) or CES connections, or each of their combinations or all of these connections.
- The type of an ATM network configuring device via an ATM connection to be consistency-checked. For example, all of or one or more specified ATM exchanges 5004 used by a certain ATM connection, and their frames, shelves, and ATM network interface devices, or each of the combinations of the above described constituent elements and all of these elements.

The consistency checking unit 5001 can again make consistency checking for the above described consistency checking targets immediately after the consistency checking process by extracting an ATM network configuring device and an ATM connection, for which the consistency checking is again required from a consistency re-checking device temporary DB 5010 to be described later.

The consistency checking target list storing unit 5008 stores the device names and ATM connection names, which are consistency checking targets and are received from the input/display terminal 5002 and the time starting unit 5003 using the consistency checking unit 5001. This list is used for the consistency checking procedure in the consistency checking unit 5001, and is referenced by a consistency checking target device message determining unit 5011.

The consistency checked configuration information temporary DB 5007 stores the result of the consistency checking for an ATM network constituent element, which is made by the consistency checking unit 5001. The consistency checking result information includes the following items.
- Inventory information such as frames, shelves, and an ATM network interface device configuring an ATM connection, ATM network interface device, etc., and setting information of a physical layer and an ATM layer.
- Band information of an ATM connection (such as a VPC, VCC, and CES connections) existing in an ATM connection network and an ATM network interface device, or of a VP/VC yet to be switched, and setting information of a service class, etc.

The configuration information data difference detecting unit 5012 detects a difference between the ATM network configuration information which is consistency-checked and stored in the consistency-checked configuration information temporary DB 5007, and the ATM network configuration information stored in the NMS 201 before being consistency-checked. The detected difference indicates that the ATM network configuration information stored in the NMS 201 does not match the actual ATM network configuration information. This difference is displayed on the input/display terminal 5002, and is stored in an ATM network configuration difference DB 5013.

The ATM network configuration difference DB 5013 stores the resultant difference between the information stored in the NMS 201 and the actual ATM network constituent element, which is detected by the configuration information data difference detecting unit 5012. This difference information includes the following items.
- The ATM network configuration information from which the difference is detected
- The type of the difference

The ATM network configuration information from which the difference is detected includes the following items.
- Inventory information of the frames, shelves, and ATM network interface devices, etc., which configure an ATM exchange 5004, and setting information of a physical layer and an ATM layer.
- Bandwidth information of an ATM connection (such as a VPC, VCC, and CEs connections) existing in an ATM exchange 5004 and in an ATM network interface device, or of a VP/VC yet to be switched, and setting information of a service class, etc.

The difference type includes the following variations.
- A difference where a constituent element exists not in the ATM network configuration information stored by the NMS 201 but in the actual ATM network 5009.
- A difference where a constituent element exists not in an actual ATM network 5009 but in the ATM network configuration information stored by the NMS 201
- A difference where a setting value stored in an actual ATM network 5009 differs from that in the ATM network configuration information stored in the NMS 201

The consistency checking target device message determining unit 5011 receives a message indicating a fault occurrence, restoration, or a state change, etc. from the ATM exchange 5004 configuring the ATM network 5009 via the message processing unit 5006 in the NMS 201, and determines whether or not the received message is a message relating to the ATM network configuring device and the ATM connection, which are consistency checking targets referenced from the consistency checking target list storing unit 5008. If the received message is a message relating to a consistency checking target as a result of the above described determination, the consistency checking target device message determining unit 5011 stores the name of the constituent element to be consistency-checked in the consistency re-checking device temporary DB 5010. The consistency checking target device message determining unit 5011 may reference not only the consistency checking target list, but also the ATM network configuring device and ATM network information stored in the ATM network configuration information DB 5014 included in the NMS 201.

The consistency re-checking device temporary DB 5010 stores the consistency checking target name determined to be related to a received message by the consistency checking target device message determining unit 5011. The target stored in this DB 5010 is again consistency-checked by the consistency checking unit 5001 after the consistency checking process is terminated.

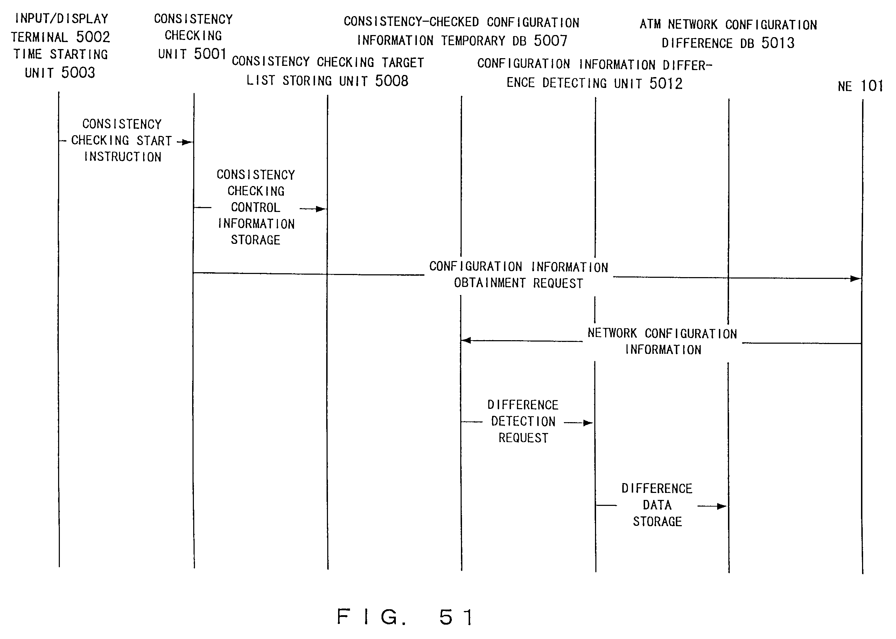

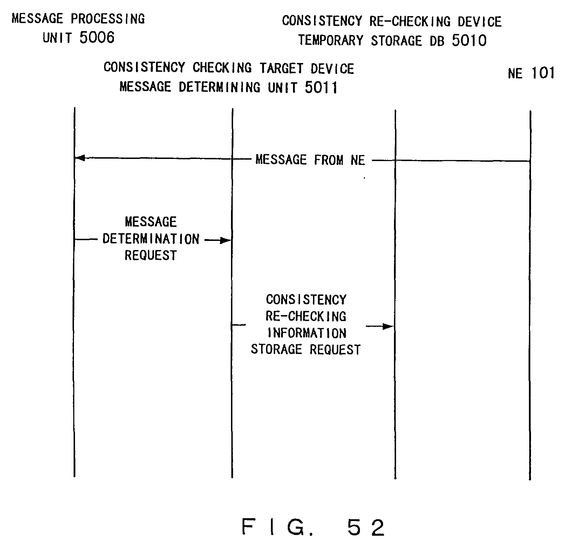

Fig. 51 shows the sequence of the consistency checking process performed in the thirteenth preferred embodiment according to the present invention, while Fig. 52 shows the sequence of message reception during the execution of the consistency checking process.

The consistency checking request is issued from the input/display terminal 5002 and the time starting unit 5003 to the consistency checking unit 5001. The information provided to the consistency checking unit 5001 at this time are a consistency checking range and the type of a network constituent element to be consistency-checked.

These items of information are stored in the consistency checking target list storing unit 5008.

At the same time, a network configuration information obtaining request is issued to the NE 101.

The network configuration information which is response data is stored in the consistency-checked configuration information temporary DB 5007.

This configuration data is transmitted to the configuration information data difference detecting unit 5012, where the transmitted data is compared with the configuration data stored by the NMS 201. The resultant difference data is then stored in the ATM network configuration difference DB 5013.

Also the sequence for receiving a message from the NE 101, which is shown in Fig. 52, starts simultaneously with the starting of the sequence shown in Fig. 51.

When a message is transmitted from the NE 101, the message processing unit 5006 receives the message. This message is then transmitted to the consistency checking target device message determining unit 5011, where it is determined whether or not this message affects the consistency checking process which is currently being performed.

If the consistency checking process must be aborted as a result of the above described determination, the request to abort the consistency checking process is issued to the consistency checking unit 5001. If the consistency checking process must be performed again, the information of a consistency checking target, which is required for again performing the consistency checking process, is stored in the consistency re-checking device temporary DB 5010.

As described above, according to the thirteenth preferred embodiment of the present invention, the NMS 201 and an administrator of the ATM network 5009 can eliminate an inconsistency between the data of the NMS 201 and that of the ATM network 5009 to be managed, which arises due to a setting change input from an administration terminal 5015 belonging to an ATM exchange 5004 to the ATM exchange 5004, a state change made to each ATM exchange 5004 during a period from the disconnection of a management message transmitting/receiving line to its restoration, a fault, etc., with the automatic process performed by the NMS 201 or the operations manually performed by the administrator. As a result, the state where a service cannot be set up due to an inconsistency between the data of the NMS 2021 and that of the actual ATM network 5009 despite the service instruction issued from the NMS 201 to the actual ATM network 5009, can be prevented.

### 〈Fourteenth Preferred Embodiment According to the Present Invention〉

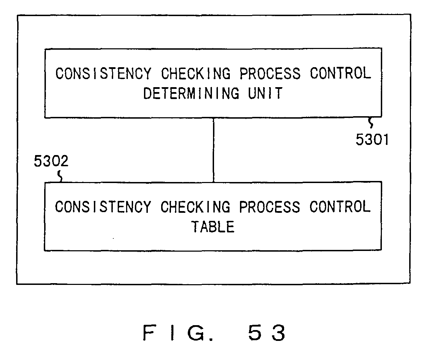

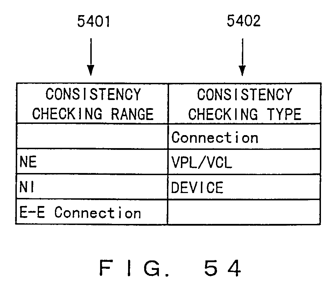

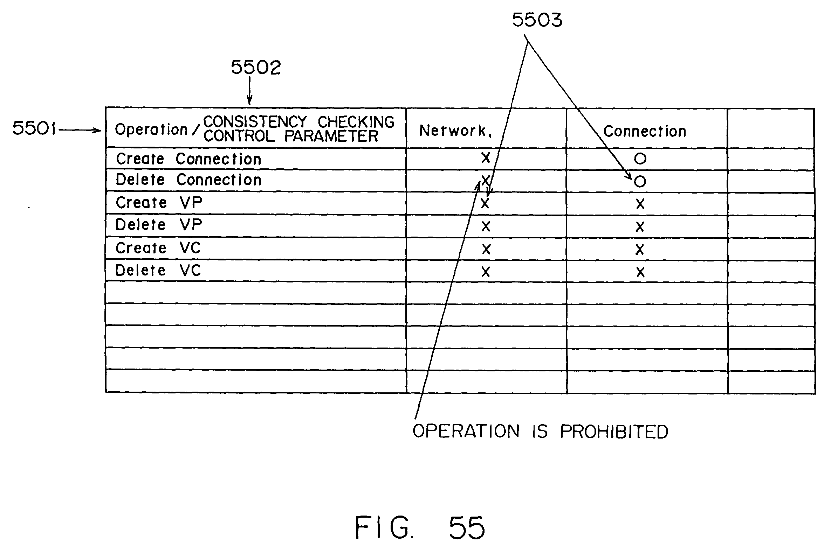

Fig. 53 is a block diagram showing he configuration of a fourteenth preferred embodiment according to the present invention (No. 1). Fig. 54 shows the structure of a consistency checking type table, while Fig. 55 shows the structure of a consistency checking process control table.

In the consistency checking type table shown in Fig. 54, 5401 indicates the target range where the consistency checking is made, and 5402 indicates a network constituent element to be consistency-checked.

In the consistency checking process control table shown in Fig. 55, 5501 is a row showing the combination of 5401 and 5402 which are shown in Fig. 54, and uniquely indicates the type of the consistency checking which is currently being made.

5502 is a column where the operations which are expected to be performed by the NMS 201 are arranged.

5503 is a parameter indicating the permission/prohibition of the operations indicated by 5502. "○" indicates that the operations are permitted, while "X" indicates that the operations are prohibited

Furthermore, the consistency checking process control table shown in Fig. 55 is prepared beforehand prior to the execution of the consistency checking process.

If a certain operation is performed by the NMS 201 during the execution of the consistency checking process in the configuration shown in Fig. 53, a consistency checking process control determining unit 5301 references the entry in which the type of the consistency checking process and the operation, which are currently being executed, match by using the consistency checking process control table 5302. If "○" is found, the consistency checking process control determining unit 5301 determines that the operation is permitted. If "X" is found, the consistency checking process control determining unit 5301 determines that the operation is prohibited, and therefore prohibits the operation.

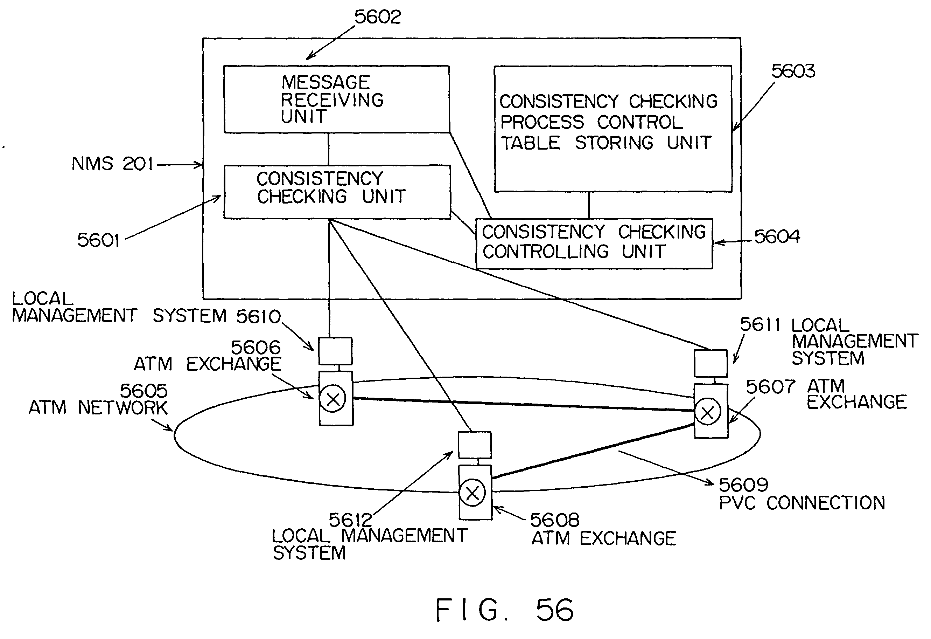

Fig. 56 is a block diagram showing the configuration of the fourteenth preferred embodiment according to the present invention (No. 2). This figure shows an actual ATM network 5605 and the NMS 201 to be connected to the ATM network 5605. The consistency checking process control table is stored in the consistency checking process control table storing unit 5603, and its structure is the same as that shown in Fig. 55.

The NMS 201 includes a consistency checking unit 5601, a message receiving unit 5602, a consistency checking process control table storing unit 5603, and a consistency checking controlling unit 5604.

The ATM network 5605 includes ATM exchanges 5606, 5607, and 5608 as its constituent elements. In the ATM network 5605, a PVC connection 5609 exists which is terminated by the ATM exchanges 5606 and 5608 via the ATM exchange 5607.

5610, 5611, and 5612 are local management systems for the respective ATM exchanges 5606, 5607, and 5608.

If the PVC consistency checking capability in a network level is invoked in such a configuration, and if the operation for releasing, for example, the connection of the ATM exchange 5607, is performed by the NMS 201, this operation is transmitted to the message receiving unit 5602, where the operation is compared with the consistency checking process control table stored in the consistency checking process control table storing unit 5603. Since the connection release operation during the execution of the PVC consistency checking process in the network level is prohibited in the example shown in Fig. 55, this operation is not accepted and the consistency checking process is continued.

As described above, according to the fourteenth preferred embodiments of the present invention, the NMS operation which has side effects on the consistency checking process during the execution of the checking can be prohibited.

### 〈Fifteenth Preferred Embodiment According to the Present Invention〉

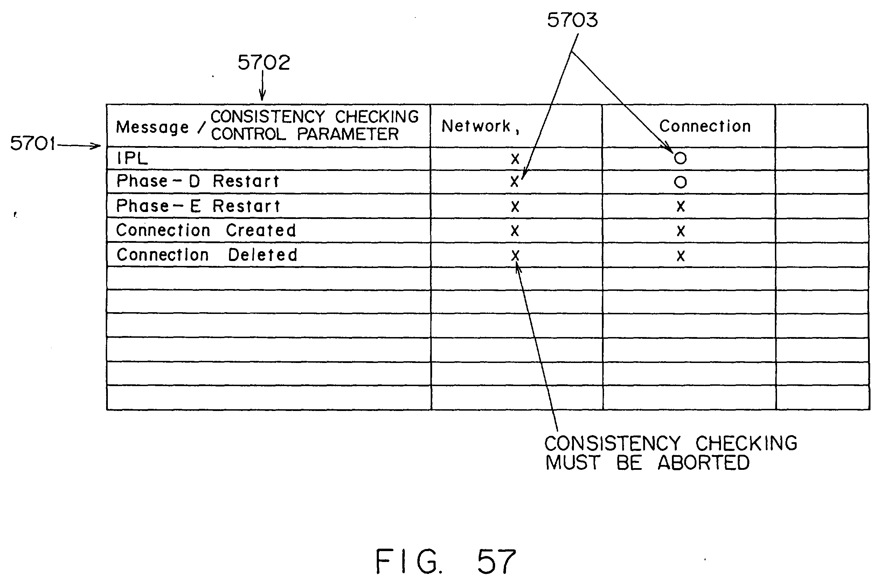

Fig. 57 shows the structure of the consistency checking process control table according to a fifteenth preferred embodiment of the present invention. The basic configuration according to the fifteenth preferred embodiment of the present invention is the same as that according to the fourteenth preferred embodiment of the present invention, which is shown in Fig. 53 or Fig. 56.

In Fig. 57, 5701 is a row in which the combination of 5401 and 5402 shown in Fig.54 is arranged, and uniquely shows the type of the consistency checking process which is currently being made, in a similar manner as in the fourteenth preferred embodiment of the present invention.

5702 is a column where the messages expected to be received by the NMS 201 are arranged.

5703 is a parameter indicating whether the consistency checking process is either continued or aborted when the messages indicated by 5702 are received. "○" indicates that the process can be continued, while "X" indicates that the process must be aborted.

The consistency checking process control table shown in Fig. 57 is prepared beforehand prior to the execution of the consistency checking process.

When the NMS 201 receives a certain message during the execution of the consistency checking process in the configuration shown in Fig. 53, the consistency checking process control determining unit 5301 references the entry in which the type of the consistency checking process which is currently being executed matches the received message, by using the consistency checking process control table 5302 having the data structure shown in Fig. 57. If "○" is found, the consistency checking process control determining unit 5301 determines that the consistency checking process can be continued. If "X" is found, the consistency checking process control determining unit 5301 determines that the consistency checking process cannot be continued and aborts the process.

An explanation will be further provided by referring to the block diagram shown in Fig. 56.

In the configuration shown in Fig. 56, the consistency checking process control table having the data structure shown in Fig. 57 is stored in the consistency checking process control table storing unit 5603.

When the PVC consistency checking capability in a network level is started in the configuration shown in Fig. 56, and, for example, when the operation for releasing the connection of the ATM exchange 5607 is performed by a local management system 5611, the message for this operation is transmitted to the message receiving unit 5602 where the received message is compared with the consistency checking process control table stored in the consistency checking process control table storing unit 5603. In the example shown in Fig. 57, if the connection release operation during the execution of the PVC consistency checking process in the network level is performed by a local management system, the consistency checking process is defined to be aborted. Therefore, this process is aborted.

As described above, according to the fifteenth preferred embodiment of the present invention, a consistency checking process can be aborted when a message causing side effects to the consistency checking process while checking, thereby suppressing a meaningful consistency checking process, is received.

### 〈Sixteenth Preferred Embodiment According to the Present Invention〉

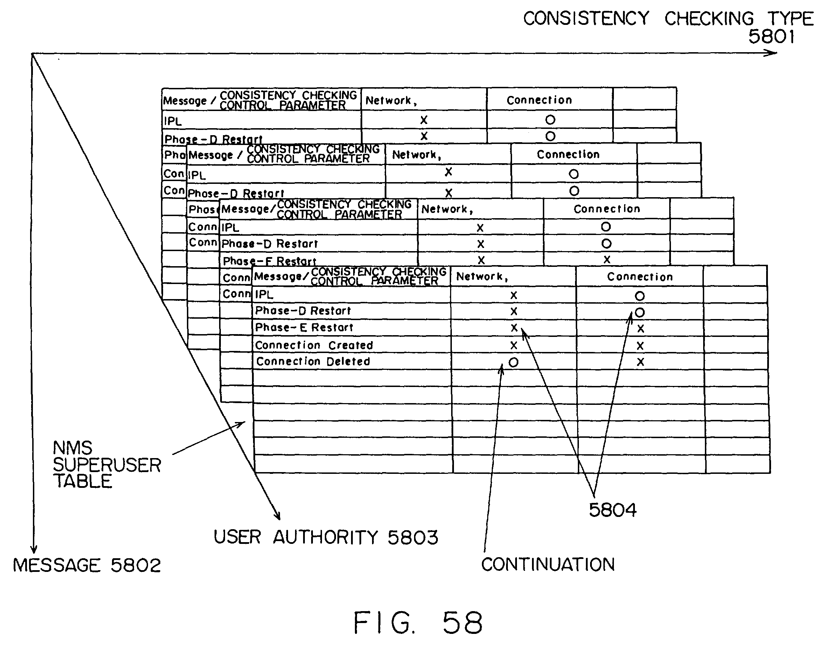

Fig. 58 shows the structure of the consistency checking process control table according to a sixteenth preferred embodiment of the present invention. The basic configuration according to the sixteenth preferred embodiment is the same as that according to the fourteenth preferred embodiment, which is shown in Fig. 53 or Fig. 56.

In Fig. 58, 5801 is a row in which the combination of 5401 and 5402 shown in Fig. 54 is arranged, and uniquely shows the type of the consistency checking process which is currently being executed in a similar manner as in the fourteenth preferred embodiment according to the present invention.

5802 is a column where the messages expected to be received by the NMS 201 are arranged.

5803 shows a consistency checking process starting user authority.

5804 is a parameter indicating whether the consistency checking process is either continued or aborted. "○" indicates that the process can be continued, while "X" indicates that the process must be aborted.

Fig. 58 is a three-dimensional table where a plurality of consistency checking process control tables shown in Fig. 57 according to the fifteenth preferred embodiment are overlapped for each user authority.

Additionally, the consistency checking process control table shown in Fig. 58 is prepared beforehand prior to the execution of the consistency checking process.

When the NMS 201 receives a certain message during the execution of the consistency checking process in the configuration shown in Fig. 53, the consistency checking process control determining unit 5301 references the entry in which the type of the consistency checking process which is currently being executed, the received message, and the consistency checking process starting user authority match, by using the consistency checking process control table 5302 having the data structure shown in Fig. 58. If "○" is found, the consistency checking process control determining unit 5301 determines that the consistency checking process can be continued. If "X" is found, the consistency checking process control determining unit 5301 determines that the consistency checking process cannot be continued and aborts this process.

An explanation will be further provided by referring to the block diagram shown in Fig. 56

In the configuration shown in Fig. 56, the consistency checking process control table having the data structure shown in Fig. 58 is stored in the consistency checking process control table storing unit 5603.

When the PVC consistency checking capability in a network level is started, for example, by an NMS administrator in the configuration shown in Fig. 56, and, for example, when the operation for releasing the connection of the ATM exchange 5607 is performed by the local management system 5611, the message for this operation is transmitted to the message receiving unit 5602, where the received message is compared with the consistency checking process control table stored in the consistency checking process control table storing unit 5603. In the example shown in Fig. 58, when the connection release operation during the execution of the PVC consistency checking process in the network level, which is invoked by the NMS administrator, is performed, the consistency checking process is defined to be continued. Therefore, the consistency checking process is continued.

As described above, according to the sixteenth preferred embodiment of the present invention, when a message having side effects on the consistency checking process is received during the execution of the checking, the consistency checking process can be aborted by referencing the consistency checking process starting user authority and assigning a priority with the user authority. As a result, a redundant consistency checking process can be prevented.

### 〈Seventeenth Preferred Embodiment According to the Present Invention〉

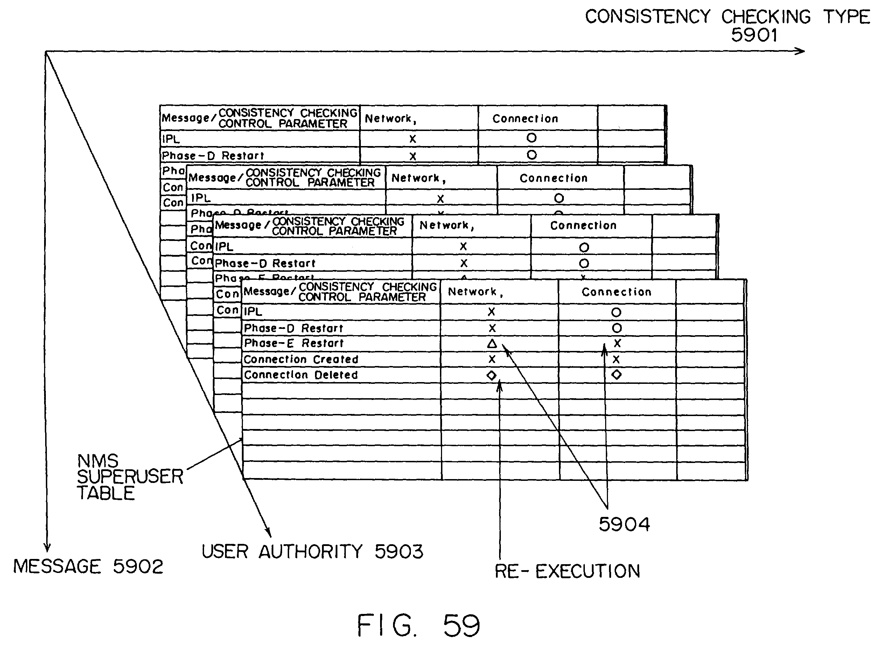

Fig. 59 shows the structure of the consistency checking process control table according to a seventeenth preferred embodiment of the present invention. The basic configuration according to the seventeenth preferred embodiment of the present invention is the same as that according to the fourteenth preferred embodiment, which is shown in Fig. 53 or Fig. 56.

The consistency checking process control table shown in Fig. 59 is structured as a three-dimensional table where the control entries included in the consistency checking process control table according to the sixteenth preferred embodiment of the present invention, which is shown in Fig. 58, are expanded.

5901 through 5903 shown in Fig. 59 are the same as 5801 through 5803 shown in Fig. 58.

5904 is a parameter indicating any of the continuation and abortion of the consistency checking process, notification of side effects, re-execution of the consistency checking process, etc., when a message shown in 5902 in Fig. 59 is received. "○" indicates the continuation of the consistency checking process. "X" indicates the abortion of the consistency checking process. "△" indicates the notification of side effects. "◇" indicates the re-execution of the consistency checking process.

The consistency checking process control table shown in Fig. 59 is prepared beforehand prior to the execution of the consistency checking process.

When the NMS 201 receives a certain message during the execution of the consistency checking process in the configuration shown in Fig. 53, the consistency checking process control determining unit 5301 references the entry where the type of the consistency checking process which is currently being executed, the received message, and the consistency checking process starting user authority, match. If "○" is found, the consistency checking process control determining unit 5301 determines that the consistency checking process can be continued. If "X" is found, the consistency checking process control determining unit 5301 determines that the consistency checking process cannot be continued and aborts this process. If "△" is found, the consistency checking process control determining unit 5301 continues to execute the consistency checking process and notifies an operator of the possible occurrence of side effects upon completion of the consistency checking process. If "◇" is found, the consistency checking process control determining unit 5301 continues to execute the consistency checking process and re-executes the process after being completed.

An explanation will be further provided by referring to the block diagram shown in Fig. 56.

In the configuration shown in Fig. 56, the consistency checking process control table having the data structure shown in Fig. 59 is stored in the consistency checking process control table storing unit 5603.

When the PVC consistency checking capability in a network level is started, for example, by an NMS administrator in the configuration shown in Fig. 56, and, for example, when the operation for releasing the connection of the ATM exchange 5607 is performed by the local management system 5611, the message for this operation is transmitted to the message receiving unit 5602 where the message is compared with the consistency checking process control table stored in the consistency checking process control table storing unit 5603. In the example shown in Fig. 59, when the connection release operation during the execution of the PVC consistency checking in the network level, which is invoked by the NMS administrator, is performed by a local management system, the consistency checking process is defined to be re-executed. Therefore, the consistency checking process is started again after being completed.

As described above, according to the seventeenth preferred embodiment of the present invention, when a message having side effects on the consistency checking process is received during the execution of the checking, the abortion of the consistency checking process, notification of side effects, re-execution of the consistency checking process can be automatically determined according to a request that an operator issues beforehand. Consequently, an efficient consistency checking process can be performed.

### 〈Explanation about a Storage Medium for Storing a Program Implementing the Preferred Embodiments〉

The present invention can be configured also as a computer-readable storage medium, when being used by a computer, for directing the computer to perform the same functions as those implemented by the respective configurations of the above described preferred embodiments according to the present invention.

In this case, the program for implementing the respective capabilities of the preferred embodiments of the present invention is loaded into a memory 6005 (such as a RAM, a hard disk etc.) included in a main body 6004 of an NMS 6001, via a portable storage medium 6002 such as a floppy disk, a CD-ROM disk, an optical disk, a removable hard disk, etc., or via a network line 6003, etc., and is executed.

## Claims

1. An asynchronous transfer mode communications network managing device (201) for managing path information in a network which makes communications in an asynchronous transfer mode, comprising:
connection uploading means (405) for uploading path information about a connection established in the network from each of network element devices (101) configuring the network at a desired time point, and for reflecting the uploaded path information as data of the network managing device (201);
connection diagnosing means (406) for detecting an inconsistency between the connection established in the network and the data of the network managing device (201); and
connection reestablishing means (407) for providing the path information for correcting contents of the inconsistency to the network managing device (201) or each of the respective network element devices (101), and for re-establishing the connection, when the inconsistency is detected.

2. The asynchronous transfer mode communications network managing device (201) according to claim 1, wherein said connection uploading means (405) uploads path information including a routing table (803), which is possessed by each of the network element devices (101) about the connection established in the network, from each network element device (101), and for reflecting the uploaded path information as the data of the network managing device (201).

3. The asynchronous transfer mode communications network managing device (201) according to claim 1, wherein said connection uploading means (405) includes:
inter-network interface data inspecting means (1201) for searching for information whose connection relationship to an opposing party is unknown among information about each inter-network interface managed by each of the network element devices (101), which is the path information uploaded from each of the network element devices (101), and for making a prediction of an inter-network interface opposing each of the inter-network interfaces based on information about the corresponding inter-network interface; and
interacting means (1205) for making an operator interactively complement the inter-network interface opposing each of the inter-network interfaces, whose connection relationship to the opposing party is unknown, by displaying each of the inter-network interfaces, whose connection relationship to the opposing party is unknown, and its inter-network interface candidates for the operator based on the prediction, and for reflecting a resultant connection relationship as the data of the network managing device.

4. The asynchronous transfer mode communications network managing device (201) according to claim 1, wherein said connection uploading means (405) automatically generates connection information of each connection established end-to-end in the network, by sequentially tracing information about a connection relationship of each inter-network interface within each of the network element devices (101), which is obtained within the network managing device (201) from the network element device (101) of the terminating point.

5. The asynchronous transfer mode communications network managing device (201) according to claim 1, further comprising:
line increase/decrease recognizing means (2101) for recognizing an increase/decrease of a line in the network, and for starting said connection diagnosing means (406) based on a recognition result; and
line fault recognizing means (2102) for recognizing a fault of a line in the network, and for starting said connection diagnosing means (406) based on a recognition result.

6. The asynchronous transfer mode communications network managing device (201) according to claim 1, further comprising:
connection constituent element inconsistency checking means (2301) for checking an inconsistency between path information which is newly obtained from the network element device (101) and path information stored in the network managing device (201), by inquiring the network element device (101) corresponding to the path information about the connection established in the network, which is possessed by the network managing device (201).

7. The asynchronous transfer mode communications network managing device (201) according to claim 6, further comprising:
interactively inputting means (2901) for interactively inputting the path information of the connection established in the network, wherein said connection constituent element inconsistency checking means (2301) is started for the path information input by said interactively inputting means (2901).

8. The asynchronous transfer mode communications network managing device (201) according to claim 6, further comprising:
loopback point determining means (3301) for determining a point in the network, at which a loopback test must be conducted, based on a result of checking made by said connection constituent element inconsistency checking means (2301); and
loopback test conducting means (3302) for automatically entering a command which makes a network element device (101) in the network, which corresponds to a result of determination made by said loopback point determining means (3301), conduct the loopback test.

9. The asynchronous transfer mode communications network managing device (201) according to claim 8, further comprising:
connection re-registration point determining means (3601) for determining a point in the network, at which the connection must be re-registered, based on the result of the checking made by said connection constituent element inconsistency checking means (2301) and a result of the loopback test conducted by said loopback test conducting means (3302); and
connection re-registering means (3602) for automatically entering a command which makes a network element device (101) in the network, which corresponds to a result of determination made by said connection re-registration point determining means (3601), re-register the connection.

10. The asynchronous transfer mode communications network managing device (201) according to claim 6, further comprising:
scheduling means (3903) for starting said connection constituent element inconsistency checking means (2301) at a reservation date and time or periodically.

11. The asynchronous transfer mode communications network managing device (201) according to claim 10, further comprising:
path information freezing means (4201) for storing the path information about the connection established in the network, which is possessed by the network managing device (201), before said connection constituent element inconsistency checking means (2301) is started at the reservation date and time or periodically.

12. The asynchronous transfer mode communications network managing device (201) according to claim 6, further comprising:
difference information holding means (2308) for holding information about a difference between before and after said connection constituent element inconsistency checking means (2301) is started;
difference information displaying means (4501) for displaying the information about the difference; and
connection restoring means (4502) for automatically entering a command which makes a network element device (101) in the network change the connection in order to restore previous path information based on the displayed information about the difference, depending on need.

13. An asynchronous transfer mode communications network managing device (201) for managing network configuration information including path information of a network (5009) which makes communications in an asynchronous transfer mode, comprising:
network configuration information uploading means (5005, 5006) for uploading the network configuration information from each of network element devices (5004) configuring the network (5009) at a desired time point, and for reflecting the uploaded network configuration information as data of the network managing device (201); and
consistency checking means (5001) for checking a consistency between the network configuration information of the network (5009) and the network configuration information of the network managing device (201).

14. The asynchronous transfer mode communications network managing device (201) according to claim 13, further comprising:
consistency checking process control information storing means (5302, 5603) for storing first consistency checking process control information (5501, 5502, 5503) which specifies permission or prohibition of an operation to be performed by the network managing device (201) for each type of consistency checking (5401, 5402) made by said consistency checking means (5001); and
consistency checking process controlling means (5301, 5604) for controlling the permission or the prohibition of the operation by referencing the first consistency checking process control information (5501, 5502, 5503), when the operation takes place in the network managing device (201) while said consistency checking means (5001) is running.

15. The asynchronous transfer mode communications network managing device (201) according to claim 13, further comprising:
consistency checking process control information storing means (5302, 5603) for storing consistency checking process control information (5701, 5702, 5703) which specifies continuation or abortion of execution of consistency checking according to a message received by the network managing device (201) for each type of the consistency checking made by said consistency checking means (5001); and
consistency checking process controlling means (5301, 5604) for controlling the continuation or the abortion of the execution of the consistency checking by referencing the consistency checking process control information (5701, 5702, 5703), when the network managing device (201) receives the message while said consistency checking means (5001) is running.

16. The asynchronous transfer mode communications network managing device (201) according to claim 13, further comprising:
consistency checking process control information storing means (5302, 5603) for storing consistency checking process control information (5801, 5802, 5803, 5804) which specifies continuation or abortion of execution of consistency checking according to a message received by the network managing device (201) and a user authority for each type of the consistency checking (5801) made by said consistency checking means (5001); and
consistency checking process controlling means (5301, 5604) for controlling the continuation or the abortion of the execution of the consistency checking by referencing the consistency checking process control information (5801, 5802, 5803, 5804) by using the message and the user authority as keys, when the network managing device (201) receives the message while said consistency checking means (5001) is running.

17. The asynchronous transfer mode communications network managing device (201) according to claim 13, further comprising:
consistency checking process control information storing means (5302, 5603) for storing consistency checking process control information (5901, 5902, 5903, 5904) which specifies continuation or abortion of consistency checking, notification of side effects, and re-execution of a consistency checking process (5904) according to a message (5902) received by the network managing device (201) and a user authority (5903) for each type of the consistency checking (5901) made by said consistency checking means; and
consistency checking process controlling means (5301, 5604) for controlling the continuation or the abortion of the consistency checking, a display of the side effects on the consistency checking, or re-execution of the consistency checking by referencing the consistency checking process control information (5901, 5902, 5903, 5904) by using the message and the user authority as keys, when the network managing device (201) receives the message while said consistency checking means (5001) is running.

18. A computer-readable storage medium (6002, 6005), when used by a computer (6001) which is a network managing device (201) for managing path information of a network making communications in an asynchronous transfer mode, for storing a program to be read by the computer (6001) and which directs the computer (6001) to perform:
a connection uploading step of uploading path information about a connection established in the network from each of network element devices (101) configuring the network at a desired time point, and of reflecting the uploaded path information as data of the network managing device (201);
a connection diagnosing step of detecting an inconsistency between the connection established in the network and the data of the network managing device (201); and
a connection re-establishing step of providing path information for correcting contents of the inconsistency to the network managing device (201) or each of the network element devices (101), and of re-establishing the connection, when the inconsistency is detected.
